# EUROPÄISCHE PATENTSCHRIFT

(11) **EP 2 051 890 B1**
(45) Veröffentlichungstag und Bekanntmachung des Hinweises auf die Patenterteilung: **27.07.2011**
(21) Anmeldenummer: 07786626.7
(22) Anmeldetag: 08.08.2007
(51) Int. Cl.: B60T 17/00

(54) **DRUCKLUFTVERSORGUNGSEINRICHTUNG**
COMPRESSED AIR SUPPLY DEVICE
DISPOSITIF D'ALIMENTATION EN AIR COMPRIMÉ

(30) Priorität: 08.08.2006 DE 102006037311
(43) Veröffentlichungstag der Anmeldung: 29.04.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2007/007026
(87) Internationale Veröffentlichungsnummer: WO 2008/017475

(56) Entgegenhaltungen:
- EP-A- 0 234 229
- EP-A- 0 608 606
- WO-A-2005/051521
- US-A- 5 595 588
- US-A1- 2004 094 036

## Beschreibung

Die Erfindung betrifft eine Druckluftversorgungseinrichtung für ein Nutzfahrzeug, mit einem Ventilgehäuse und einer mit dem Ventilgehäuse verbundenen, im Wesentlichen axialsymmetrischen, wechselbaren Lufttrocknerpatrone, wobei das Ventilgehäuse und die Lufttrocknerpatrone über eine im Wesentlichen kreisförmige Dichtung miteinander verbunden sind, die in einer Ebene senkrecht zur Achse der Lufttrocknerpatrone liegt.

Derartige Druckluftversorgungseinrichtungen beliefern Druckluftverbraucher in Nutzfahrzeugen mit aufbereiteter Druckluft. Typische Druckluftverbraucher sind beispielsweise ein pneumatisches Bremssystem oder eine Luftfederung. Eine Druckluftversorgungseinrichtung vereinigt zahlreiche Funktionen. Eine wichtige Aufgabe besteht in der Trocknung und Reinigung der Luft. Zu diesem Zweck ist eine Lufttrocknerpatrone vorgesehen, die Filtereinrichtungen und ein Trockenmittel enthält. Andere wichtige Aufgaben bestehen in der Druckregelung der von einem Kompressor gelieferten Druckluft sowie in der sicheren Verteilung der Druckluft auf die verschiedenen Verbraucherkreise. Diese Aufgaben werden durch Ventileinrichtungen, die in einem Ventilgehäuse untergebracht sind, übernommen, nämlich einem Druckregler und einem Mehrkreisschutzventil. Moderne Druckluftversorgungseinrichtungen enthalten zusätzlich zu den pneumatischen Komponenten eine elektronische Steuerung sowie elektrisch ansteuerbare Komponenten, beispielsweise Magnetventile, und eine mit der elektronischen Steuerung in Verbindung stehende Sensorik. Die so ausgestatteten Druckluftversorgungseinrichtungen werden auch als EAC (Electronic Air Control) bezeichnet.

Da die Aufnahmefähigkeit der Lufttrocknerpatrone an Fremdstoffen und Feuchtigkeit begrenzt ist, muss diese in regelmäßigen zeitlichen Abständen beziehungsweise in Abhängigkeit der Förderleistung des Kompressors regeneriert und schließlich ausgetauscht werden. Der Wartungsvorgang des Austausches sollte nützlicherweise vom Fahrer des Nutzfahrzeugs selbst vorgenommen werden können, das heißt ohne die Hilfe einer Werkstatt. Folglich sind die Lufttrocknerpatronen gut zugänglich am Ventilgehäuse über ein mehrgängiges Gewinde angebracht. Muss der Fahrer des Nutzfahrzeuges die Lufttrocknerpatrone wechseln, so ist hierfür lediglich ein Abschrauben der Patrone erforderlich, wobei während des Abschraubvorgangs der im Druckluftsystem vorhandene Restdruck in unproblematischer Weise entweichen kann. Die neue Lufttrocknerpatrone kann dann über das Gewinde mit dem Ventilgehäuse verbunden werden.

An der Verbindungsart mittels eines Gewindes ist mitunter problematisch, dass der Fahrer des Nutzfahrzeuges ein Gefühl dafür haben muss, wie fest die Lufttrocknerpatrone auf das Ventilgehäuse aufzuschrauben ist. Dabei kann ihm ein an Bord mitzuführendes Werkzeug helfen, welches die in jedem Fall korrekte Montage sicherstellt, wobei die Mitführung des Werkzeugs dann aber einen zusätzlichen Aufwand darstellt. Weiterhin wird für die Gewindeverbindung eine gewisse zusätzliche Montagehöhe benötigt, was dem allgemeinen Bestreben der Bauraumverringerung von Fahrzeugkomponenten entgegensteht.

Die EP 0 234 229 A2 beschreibt einen Lufttrockner mit einer Trockenmittelbox. Die Trockenmittelbox besteht dabei im Wesentlichen aus einem hutförmigen Gehäuse und einem von unten in das hutförmige Gehäuse eingesetzten Deckel. Zwischen dem hutförmigen Gehäuse und dem Deckel ist weiterhin ein Bajonettverschluss vorgesehen, der in seinem geöffneten Zustand ein Auswechseln des in der Trockenmittelbox vorhandenen Trockenmittels in einfacher Weise erlaubt. Die Verbindung zwischen dem Lufttrockner und der Trockenmittelbox erfolgt über einen mit einem Innengewinde ausgestatten zentralen Leitungsanschluss, der in dem Deckel angeordnet ist.

Auch aus der EP 0 608 606 A1 und der US 2004/094036 A1 ist jeweils das Befestigen einer Luftfilterpatrone auf dem Lufttrockergehäuse mit Hilfe eines Schraubgewindes bekannt.

Weiterhin ist aus der US 5,595,588 A auch das Befestigen einer Luftfilterpatrone mit Hilfe einer zentralen Befestigungsschraube bekannt, während aus der WO 2005/051521 A1 eine Luftfilterpatrone bekannt ist, die mit Hilfe eines aufgesetzten Befestigungsringes an dem Lufttrocknergehäuse fixiert wird, wobei der Befestigungsring ausschließlich mit Hilfe von Schrauben an dem Lufttrocknergehäuse fixiert ist.

Der Erfindung liegt die Aufgabe zugrunde, eine Druckluftversorgungseinrichtung zur Verfügung zu stellen, die bei geringer Montagehöhe eine fehlerfreie und sichere Montage der Lufttrocknerpatrone zulasst, wobei insbesondere keine Werkzeuge erforderlich sein sollen.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass das Ventilgehäuse und die Lufttrocknerpatrone durch achsparalleles Zusammenführen miteinander koppelbar sind und dass das Ventilgehäuse und die Lufttrocknerpatrone Einrichtungen aufweisen, die eine dichte Verbindung zwischen dem Ventilgehäuse und der Lufttrocknerpatrone nicht in allen mit Bezug auf die Achse der Lufttrocknerpatrone definierten Winkelpositionen der Lufttrocknerpatrone gegenüber dem Ventilgehäuse zulassen. Bei der Montage wird man somit gezwungen, bestimmte Winkelpositionen der Lufttrocknerpatrone gegenüber dem Ventilgehäuse einzuhalten. Dies kann die Montagearbeit erleichtern. Zusätzlich kann auf der Grundlage einer Abstimmung der an dem Ventilgehäuse und der Lufttrocknerpatrone angebrachten Einrichtungen sichergestellt werden, dass nur eine geeignete Lufttrocknerpatrone auf das Ventilgehäuse aufgesetzt wird. Hierdurch wird vermieden, dass versehentlich eine falsche Lufttrocknerpatrone montiert wird. Außerdem kann vermieden werden, dass Konkurrenzprodukte, die nicht mit den entsprechenden Einrichtungen ausgestattet sind, anstelle eines Originalprodukts verwendet werden, und

dass die Einrichtungen einen mit Abstand von der Achse an dem Ventilgehäuse angeordneten exzentrischen Vorsprung und eine Ausnehmung an der Lufttrocknerpatrone umfassen, in die der Vorsprung im verbunden Zustand hineinragt. Ein solcher Vorsprung, etwa in der Form eines Zapfens innerhalb der Aufsatzfläche, auf die die Lufttrocknerpatrone aufsetzt, oder einer Nase am äußeren Rand der Aufsatzfläche dient zur Vorzentrierung der Lufttrocknerpatrone relativ zu dem Ventilgehäuse und zur Verdrehsicherung der Komponenten gegeneinander. Der Zapfen beziehungsweise die Nase können beispielsweise eine solche Länge haben, dass diese bei der Montage der Lufttrocknerpatrone den ersten Kontakt zwischen dem Ventilgehäuse und der Lufttrocknerpatrone zur Verfügung stellen.

Weiterhin kann vorgesehen sein, dass der Vorsprung zumindest teilweise formschlüssig in die Ausnehmung hineinragt. Durch den Formschluss wird die Führung der Lufttrocknerpatrone in die richtige Position bezüglich des Ventilgehäuses noch weiter verbessert. Insbesondere kann der Vorsprung als Nase am äußeren Rand der Fläche, auf die die Lufttrocknerpatrone aufsetzt, realisiert sein, wobei die Nase in die Ausnehmung am Gehäuse der Lufttrocknerpatrone formschlüssig hineinragt. Neben ihrer Funktion als Verdrehsicherung sorgt die Nase für einen sicheren Halt der Dichtung zwischen der Druckluftversorgungseinrichtung und der Luftttrocknerpatrone. Bei fehlendem oder mangelhaftem Formschluss besäße die Dichtung keinen ausreichenden Halt. Eine dichte Verbindung könnte dann nicht hergestellt und die Druckluftversorgungseinrichtung nicht in Betrieb genommen werden.

Ebenfalls kann vorgesehen sein, dass die Einrichtungen gezahnte Bereiche an dem Ventilgehäuse und der Lufttrocknerpatrone umfassen, die nur in vorgegebenen Winkelpositionen ein dichtes Zusammenfügen von Ventilgehäuse und Filterpatrone gestatten. Auch hierdurch kann einerseits die relative Winkelposition mit Bezug auf beliebige funktionelle Eigenschaften der Lufttrocknerpatrone festgelegt werden. Weiterhin wird vermieden, dass nicht gezahnte oder in ungeeigneter Weise gezahnte Lufttrocknerpatronen auf das Ventilgehäuse aufgesetzt werden, wodurch eine Fehlmontage verhindert und einer unerwünschten Produktpiraterie Einhalt geboten wird.

Weiterhin kann vorgesehen sein, dass das Ventilgehäuse und die Lufttrocknerpatrone über einen Bajonettverschluss miteinander verbunden sind. Ein Bajonettverschluss bietet den Vorzug einer gegenüber einer Gewindeverbindung reduzierten Montagehöhe, und die Montage der Lufttrocknerpatrone ist gegenüber der herkömmlichen Montage über ein Gewinde vereinfacht.

Gemäß einer bevorzugten Ausführungsform ist vorgesehen, dass die Lufttrocknerpatrone und das Ventilgehäuse zumindest abschnittsweise jeweils einen sich im Wesentlichen radial nach außen erstreckenden Kragen aufweisen, wobei durch mindestens einen dieser Krägen Abschnitte gebildet sind, die eine in Schließrichtung des Bajonettverschlusses zunehmende axiale Kragendicke aufweisen, und dass ein über die Krägen geführter, von der Lufttrocknerpatrone und dem Ventilgehäuse lösbarer Außenbajonettring vorgesehen ist, der einen sich in radiale Richtung nach innen erstreckenden Kragen und in axiale Richtung dazu versetzte nach innen gerichtete Vorsprünge aufweist, wobei die axiale Breite der Vorsprünge der variablen axialen Kragendicke in der Weise angepasst ist, dass der Bajonettverschluss durch relative Drehung von Außenbajonettring und Ventilgehäuse beziehungsweise Lufttrocknerpatrone schließbar beziehungsweise lösbar ist. Ein Außenbajonettring als Verbindungselement bietet sich an, wenn das Ventilgehäuse und die Lufttrocknerpatrone im Wesentlichen die gleichen radialen Abmessungen haben sollen.

Nützlicherweise ist vorgesehen, dass der Kragen des Ventilgehäuses mehrere sich in Umfangsrichtung erstreckende Kragenabschnitte mit in Schließrichtung des Bajonettverschlusses zunehmender axialer Kragendicke und mit dazwischen vorgesehenen Ausnehmungen aufweist und dass sich der Kragen der Lufttrocknerpatrone über den gesamte Umfang im Wesentlichen gleichförmig erstreckt und bei geschlossenem Bajonettverschluss über eine Dichtung mit dem Ventilgehäuse zusammenwirkt. Die vergleichsweise dünnwandige Lufttrocknerpatrone muss somit keine besondere Ausgestaltung im Bereich ihres Kragens erfahren, während die zur Realisierung des Bajonettverschlusses erforderlichen Abschrägungen im Bereich des Ventilgehäuses realisiert werden.

Es ist bevorzugt, dass die Kragenabschnitte zumindest teilweise einen Anschlag zur Begrenzung der Schließdrehung des Bajonettverschlusses aufweisen. Durch den Anschlag bestehen für den Fahrer beim Aufsetzen einer neuen Lufttrocknerpatrone keine Zweifel mehr, dass die Montage ordnungsgemäß erfolgt ist.

Gemäß einer weiteren bevorzugten Ausführungsform der vorliegenden Erfindung ist vorgesehen, dass die Lufttrocknerpatrone einen sich im Wesentlichen radial nach außen erstreckenden Kragen aufweist, der durch einen die Lufttrocknerpatrone umgebenden Innenbajonettring im geschlossenen Zustand des Bajonettverschlusses in axiale Richtung mit Kraft beaufschlagbar ist, dass der Innenbajonettring einen sich in radiale Richtung nach außen erstreckenden Kragen und in axiale Richtung dazu versetzte nach außen gerichtete Vorsprünge aufweist, die in Schließrichtung des Bajonettverschlusses zunehmende axiale Vorsprungdicke aufweisen, und dass ein zumindest teilweise radial außerhalb des Innenbajonettrings liegender Teil des Ventilgehäuses sich radial nach außen erstreckende Ausnehmungen aufweist, deren axiale Dicken in der Weise den Vorsprüngen des Ventilgehäuses angepasst sind, dass der Bajonettverschluss durch relative Drehung von Innenbajonettring und Ventilgehäuse schließbar beziehungsweise lösbar ist. Die Verwendung eines Innenbajonettringes bietet sich an, wenn das Ventilgehäuse einen größeren Radius als die Lufttrocknerpatrone aufweist. Der Innenbajonettring fügt sich dann ohne die Beanspruchung weiteren Bauraumes in das Ventilgehäuse ein.

Wie auch schon im Falle des Außenbajonettringes ist vorgesehen, dass die Vorsprünge des Innenbajonettrings zumindest teilweise einen Anschlag zur Begrenzung der Schließdrehung des Bajonettverschlusses aufweisen.

Gemäß einer weiteren besonders bevorzugten Ausführungsform der erfindungsgemäßen Druckluftversorgungseinrichtung ist vorgesehen, dass der Bajonettverschluss einen Bajonettring aufweist, der eine ein Sicherungselement aufnehmende Öffnung hat, wobei das Sicherungselement im geschlossenen Zustand des Bajonettverschlusses in eine Öffnung des Ventilgehäuses einrastet, über die die Druckluftversorgungseinrichtung durch Betätigen des Sicherungselementes entlüftet werden kann. Zusätzlich zu den vorzugsweise vorhandenen Anschlägen im Bajonettverschluss, die die Drehung des Bajonettverschlusses begrenzen, kann ein einrastendes Sicherungselement zusätzliche Sicherheit bieten. Das Einrasten kann akustisch vom Fahrer wahrgenommen werden. Zusätzlich bietet das Sicherungselement die Möglichkeit, die Druckluftversorgungseinrichtung vor dem Öffnen des Bajonettverschlusses zu entlüften. Dies ist bei einer Verbindung über einen Bajonettverschluss nützlich, da ansonsten nach einer geringen Öffnungsbewegung des Bajonettverschlusses eine schlagartige Entlüftung erfolgen könnte, die mitunter zu gefährlichen Situationen führen könnte. Da das Sicherungselement im geschlossenen Zustand des Bajonettverschlusses einrastet und so die Öffnungsbewegung verhindert, wird sichergestellt, dass stets vor dem Öffnen durch Betätigen des Sicherungselementes eine Entlüftung stattfinden muss.

Dies ist konstruktiv so realisiert, dass das Sicherungselement eine Nase aufweist, die durch die Kraft einer Feder in die Öffnung des Ventilgehäuses gedrückt wird, wobei die Nase zum Entlüften der Druckluftversorgungseinrichtung und zur Freigabe der Öffnungsbewegung des Bajonettverschlusses gegen die Federkraft bewegbar ist.

Die Erfindung wird nun mit Bezug auf die begleitenden Zeichnungen anhand besonders bevorzugter Ausführungsformen beispielhaft erläutert.

Es zeigen:
- Figur 1: eine erste Ausführungsform einer erfindungsgemä- ßen Druckluftversorgungseinrichtung in geschnit- tener Darstellung;
- Figur 2: eine erste Ausführungsform einer erfindungsgemä- ßen Druckluftversorgungseinrichtung in geschnit- tener Explosionsdarstellung;
- Figur 3: eine Schnittansicht eines Teils einer erfindungs- gemäßen Druckluftversorgungseinrichtung mit einem Sicherungselement;
- Figur 4: eine perspektivische Darstellung eines Außenbajo- nettrings;
- Figur 5: eine Draufsicht eines Außenbajonettrings;
- Figur 6: eine zweite Ausführungsform einer erfindungsgemä- ßen Druckluftversorgungseinrichtung in geschnit- tener Darstellung;
- Figur 7: eine perspektivische Darstellung eines Innenbajo- nettrings;
- Figur 8: eine Draufsicht eines Innenbajonettrings;

- Figur 9: eine dritte Ausführungsform einer erfindungsgemä- ßen Druckluftversorgungseinrichtung in geschnit- tener Darstellung;
- Figur 10: eine perspektivische Darstellung einer Luft- trocknerpatrone mit Fußflansch und Innenbajonett- ring;
- Figur 11: eine perspektivische Darstellung eines Innenbajo- nettrings mit Fußflanschfunktion;
- Figur 12: eine Schnittansicht eines Teils einer erfindungs- gemäßen Druckluftversorgungseinrichtung zur Er- läuterung einer ersten Montageart eines Fußflan- sches;
- Figur 13: eine Schnittansicht eines Teils einer erfindungs- gemäßen Druckluftversorgungseinrichtung zur Er- läuterung einer zweiten Montageart eines Fußflan- sches;
- Figur 14: einen Teil einer erfindungsgemäßen Druckluftver- sorgungseinrichtung in geschnittener Darstellung;
- Figur 15: einen Teil einer Trockenmittelbox in perspektivi- scher Darstellung;
- Figur 16: eine perspektivische geschnittene Darstellung ei- nes Teils einer erfindungsgemäßen Lufttrockner- patrone;

- Figur 17: eine Trockenmittelbox in perspektivischer Dar- stellung;
- Figur 18: eine Schnittansicht einer erfindungsgemäßen Druckluftversorgungseinrichtung;
- Figur 19: eine perspektivische geschnittene Darstellung ei- ner erfindungsgemäßen Druckluftversorgungsein- richtung;
- Figur 20: eine perspektivische Darstellung eines erfin- dungsgemäßen Ventilgehäuses;
- Figur 21: eine perspektivische Darstellung einer Filterpat- rone;
- Figur 22: eine perspektivische Darstellung eines Aus- schnitts eines erfindungsgemäßen Ventilgehäuses;
- Figur 23: eine perspektivische geschnittene Darstellung ei- nes Teils einer erfindungsgemäßen Druckluftver- sorgungseinrichtung;
- Figur 24: eine perspektivische Darstellung eines Aus- schnitts einer erfindungsgemäßen Druckluftversor- gungseinrichtung;
- Figur 25: eine perspektivische geschnittene Darstellung ei- ner erfindungsgemäßen Druckluftversorgungsein- richtung;

- Figur 26: eine schematische Darstellung einer weiteren Aus- führungsform einer erfindungsgemäßen Druckluft- versorgungseinrichtung und
- Figur 27: eine perspektivisch geschnittene Darstellung ei- ner weiteren Ausführungsform einer erfindungsge- mäßen Druckluftversorgungseinrichtung.

Bei der nachfolgenden Beschreibung der Zeichnungen bezeichnen gleiche Bezugszeichen gleiche oder vergleichbare Komponenten.

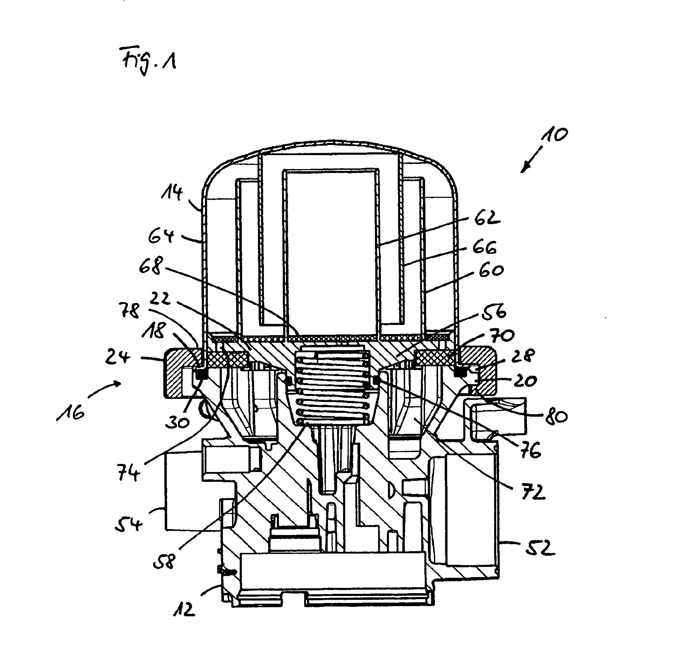

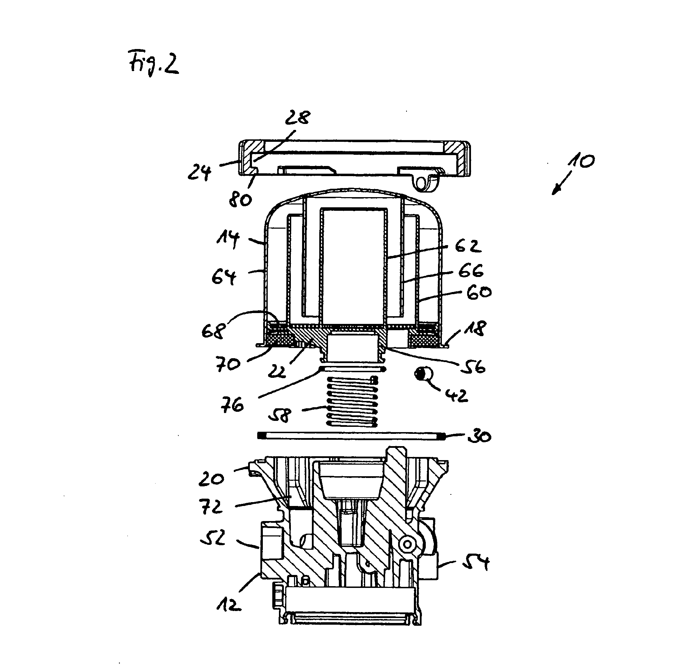

Figur 1 zeigt eine erste Ausführungsform einer erfindungsgemäßen Druckluftversorgungseinrichtung in geschnittener Darstellung. Figur 2 zeigt eine erste Ausführungsform einer erfindungsgemäßen Druckluftversorgungseinrichtung in geschnittener Explosionsdarstellung. Die Druckluftversorgungseinrichtung 10 weist ein Ventilgehäuse 12 und eine Lufttrocknerpatrone 14 auf.

Das Ventilgehäuse 12 hat einen Eingang 52, an dem ein Kompressor anschließbar ist und über den aufzubereitende Druckluft einströmen kann. Weiterhin ist ein Ausgang 54 zur Weiterleitung der aufbereiteten Druckluft vorgesehen.

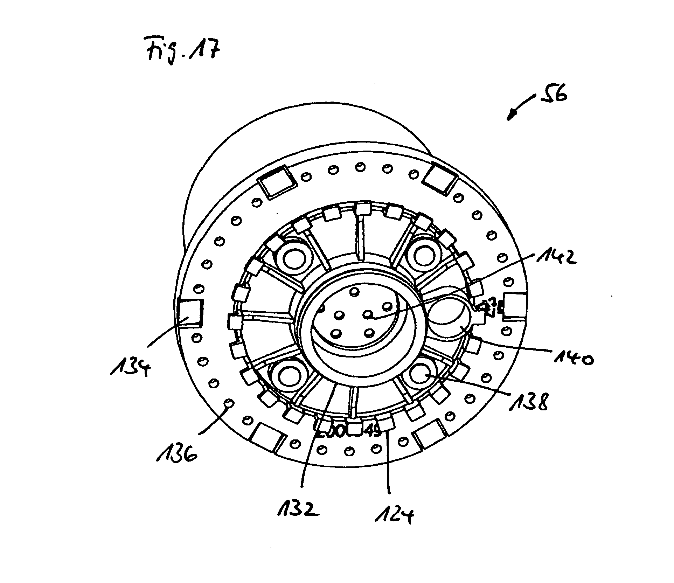

In der Lufttrocknerpatrone 14 ist eine vorzugsweise aus Kunststoff bestehende Trockenmittelbox 56 angeordnet, die in das Ventilgehäuse 12 hineinragt und an diesem über eine Feder 58 abgestützt ist. Die Trockenmittelbox 56 umfasst eine Basis 22, ein äußeres Rohrstück 60 und ein inneres Rohrstück 62, die sich in die Lufttrocknerpatrone 14 hinein erstrecken. Zwischen den Rohrstücken 60, 62 ist ein am Gehäuse 64 der Lufttrocknerpatrone 14 befestigtes, vorzugsweise aus Metall bestehendes weiteres Rohrstück 66 angeordnet, welches in Richtung des Ventilgehäuses 12 offen ist, während die Rohrstücke 60, 62 der Trockenmittelbox 56 in die entgegensetzte Richtung geöffnet sind. Die Verbindung des Rohrstückes 66 mit dem Gehäuse 64 kann nützlicherweise durch Punktschweißen erfolgen, wobei eine zusätzliche Abdichtung vorgesehen ist, beispielsweise durch aushärtendes Material. Durch die so ineinander angeordneten Rohrstücke 60, 62, 66 sowie das Gehäuse 64 wird ein Labyrinth gebildet, das vollständig mit Granulat zum Trocknen der das Labyrinth durchströmenden Druckluft gefüllt ist. Die dichte Packung des Trockenmittels in der Lufttrocknerpatrone 14 wird durch die von der Feder 58 vermittelte Kraft aufgebracht, welche die Trockenmittelbox 56 in die Lufttrocknerpatrone 14 hineintreibt. Der von Trockenmittel erfüllte Raum ist in Richtung des Ventilgehäuses 12 zumindest teilweise durch Filtervlies 68 begrenzt, wobei die einzelnen durch die Rohrstücke 60, 62, 66 abgegrenzten Bereiche des Filtervlieses 68 aus identischen oder verschiedenen Materialien bestehen können. Insbesondere der äußere Bereich des Filtervlieses 68 zwischen dem Rohrstück 60 und dem Gehäuse 64 der Lufttrocknerpatrone 14 und der zentrale Bereich des Filtervlieses 68 innerhalb des inneren Rohrstückes 62 sind als Staubfilter ausgelegt, während der zwischen dem äußeren Rohrstück 60 und dem inneren Rohrstück 62 angeordnete Vliesbereich für die Aufnahme und bedarfsweise Abgabe von Fremdstoffen ausgelegt ist, die über Rückschlagventile (siehe Figur 17) aus der Trockenmittelbox 56 austreten können. Im Bereich der unteren Begrenzung der Lufttrocknerpatrone 14 ist weiterhin ein Vorfilter 70 angeordnet, der optional die Eigenschaften eines Koaleszenzfilters aufweisen kann. Der Vorfilter 70 dient insbesondere der Reinigung der Druckluft im Hinblick auf Kompressoröl und vergleichbare Verschmutzungen.

In das Ventilgehäuse 12 über den Eingang 52 einströmende Druckluft wird über Kanäle im Ventilgehäuse 12 verteilt, um dann über den Kanal 72 den Vorfilter 70 anzuströmen und durch diesen hindurch zu treten. Im Anschluss daran strömt die Druckluft durch den Kanal 74 und nachfolgend durch den Filtervlies 68 in das dichtgepackte Trockenmittel ein. Die Luft strömt in der Lufttrocknerpatrone bis über das offene Ende des äußeren Rohrstückes 60 der Trockenmittelbox 56 hinaus, und sie wird dann umgelenkt, um zwischen dem äußeren Rohrstück 60 und dem am Gehäuse 64 des Lufttrockners befestigten Rohrstück 66 wieder in Richtung Ventilgehäuse 12 zu strömen. Nachdem die Druckluft das offene Ende des Rohrstückes 60 passiert hat, wird diese wiederum umgelenkt, um nachfolgend zwischen dem am Gehäuse 64 der Lufttrocknerpatrone 14 befestigten Rohrstück 66 und dem inneren Rohrstück 62 sowie über das Ende dieses Rohrstückes 62 hinaus zu strömen. Dort wird die Luft wiederum umgelenkt, um dann zentral durch das innere Rohrstück 62 und den Filtervlies 68 aus der Lufttrocknerpatrone 14 und der Trockenmittelbox 56 wieder in das Ventilgehäuse 12 einzuströmen. Die Luft wird in dem Ventilgehäuse 12 über Kanäle gesammelt und ist dann über den Ausgang 54 entnehmbar.

Um die so geschilderte Luftführung zu ermöglichen, ist eine Abdichtung der Trockenmittelbox 56 gegen das Ventilgehäuse 12 mittels einer Dichtung 76 erforderlich, die hier als radial wirkende Dichtung, insbesondere als O-Ring ausgebildet ist. Weiterhin ist eine axial wirkende Dichtung 30 vorgesehen, die einen Kragen 18 des Gehäuses 64 der Lufttrocknerpatrone 14 gegen das Ventilgehäuse 12 abdichtet. Um die für die Abdichtung erforderliche Kompression der Dichtung 30 zur Verfügung zu stellen, ist ein Bajonettverschluss 16 vorgesehen, der das Ventilgehäuse 12 und die Lufttrocknerpatrone 14 zusammenhält. Der Bajonettverschluss 16 umfasst einen Außenbajonettring 26 mit inneren abschnittsweise gebildeten Ausnehmungen 28, die durch Vorsprünge 80 und einen in Umfangsrichtung durchgehenden Kragen 78 gebildet sind. Diese inneren Ausnehmungen 28 sind geeignet, Kragenabschnitte 20 des Ventilgehäuses 12 aufzunehmen und mit diesen über jeweils abgeschrägte Flächen durch Verdrehen des Außenbajonettrings 24 gegen das Ventilgehäuse 12 eine axiale Kraft aufzubringen, welche den Kragen 18 der Lufttrocknerpatrone 14 über die Dichtung 30 gegen das Ventilgehäuse 12 presst. Der in Umfangsrichtung durchgehende Kragen 78 des Außenbajonettrings 24 wirkt somit mit dem in Umfangrichtung durchgehenden Kragen 18 der Lufttrocknerpatrone 14 zusammen, während die Kragenabschnitte 20 des Ventilgehäuses mit den Vorsprüngen 80 des Außenbajonettrings 24 über deren geneigte Flächen zusammenwirken und somit bei relativer Drehung die Charakteristik eines Bajonettverschlusses zu Verfügung stellen. In der Explosionsdarstellung gemäß Figur 2 ist weiterhin ein Sicherungselement zu erkennen, das mit Bezug auf die nachfolgende Figur näher erläutert wird.

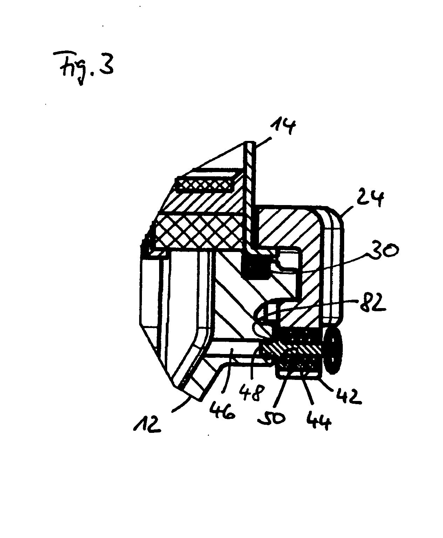

Figur 3 zeigt eine Schnittansicht eines Teils einer erfindungsgemäßen Druckluftversorgungseinrichtung mit einem Sicherungselement. Das Sicherungselement 42 sitzt in einer Öffnung 44 des Außenbajonettrings 24 und ist mit diesem dort fest verbunden. In dem in Figur 3 dargestellten Zustand dringt eine Nase 48 des Sicherungselementes 42 in eine Öffnung 46 des Ventilgehäuses ein, die mit den Druckluftführungen im Ventilgehäuse 12 in Verbindung steht. Die Nase 48 des Sicherungselements 42 trägt eine Dichtung 82, so dass im dargestellten Zustand ein Abströmen von Druckluft verhindert wird. Soll der Außenbajonettring 24 zum Öffnen des Bajonettverschlusses 16 gegen das Ventilgehäuses 12 verdreht werden, so ist es zunächst erforderlich, das Sicherungselement 42 aus der Öffnung 46 gegen die Kraft einer Feder 50 nach außen zu ziehen. Nach Freigabe der Öffnung 46 kann dann die Druckluft aus dem System abströmen; gleichzeitig ist die Drehbewegung des Außenbajonettrings 24 gegen das Ventilgehäuse 12 freigegeben. Beim Schließen des Bajonettverschlusses 16 wird der Außenbajonettring 24 so lange gegen das Ventilgehäuse 12 in Schließrichtung gedreht, bis die Nase 48 wieder in die Öffnung 46 einrastet und diese abdichtet. Ist das Einrasten hörbar, so liegt gleichzeitig für den Fahrer eine Bestätigung für die korrekten Montage der Druckluftversorgungseinrichtung 10 vor. Da eine Öffnung 46 zum Abströmen von Druckluft nur an einer Umfangsposition des Ventilgehäuses 12 vorhanden sein wird, ist sicherzustellen, dass der Außenbajonettring 24 nur in genau einer Position über die miteinander zu verbindenden Krägen geführt werden kann, beispielsweise durch mechanische Führungen, damit beim Schließen dann auch das Sicherungselement 42 und die Öffnung 46 aufeinander treffen.

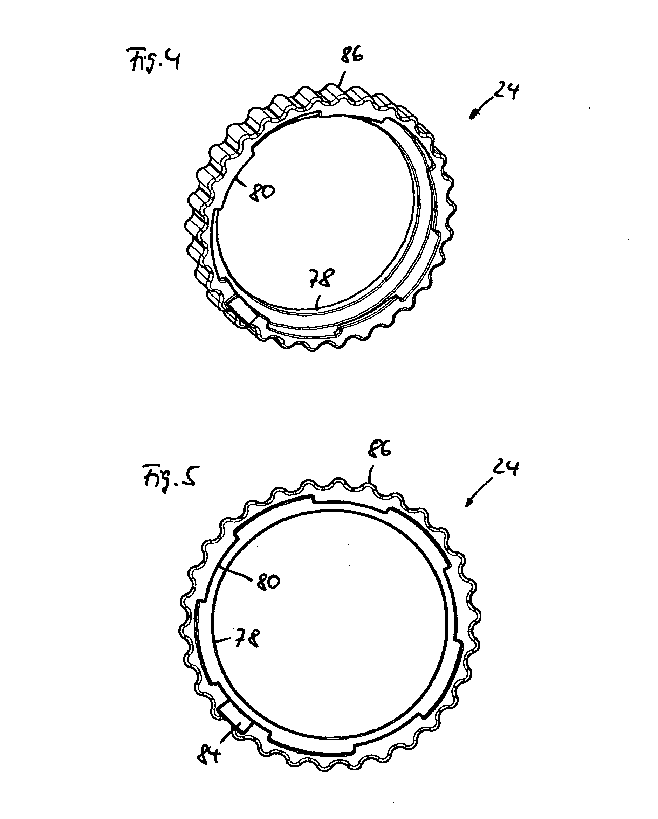

Figur 4 zeigt eine perspektivische Darstellung eines Außenbajonettrings. Figur 5 zeigt eine Draufsicht eines Außenbajonettrings. Der Außenbajonettring hat an seiner Außenseite eine gewellte Oberfläche 86, was die Handhabbarkeit beim Schließen und Öffnen verbessert. An der Innenseite des Außenbajonettrings 24 sind der vorspringende Kragen 78, der auf dem Kragen 18 der Lufttrocknerpatrone 14 zu liegen kommt, sowie die Vorsprünge 80 erkennbar, die mit den Abschnitten 20 des Ventilgehäuses zusammenwirken. Weiterhin ist der Sicherungselementhalter 84 erkennbar. In Figur 4 ist erkennbar, dass die Vorsprünge 80 von einem Endbereich zum anderen in ihrer Dicke zunehmen, wobei zusätzlich noch eine stärkere Anlaufschräge am dünneren Endbereich vorgesehen ist. Die Anlaufschräge kann beispielsweise eine Neigung von 30° haben, während die nachfolgende Fläche eine Steigung von beispielsweise 1,5° hat.

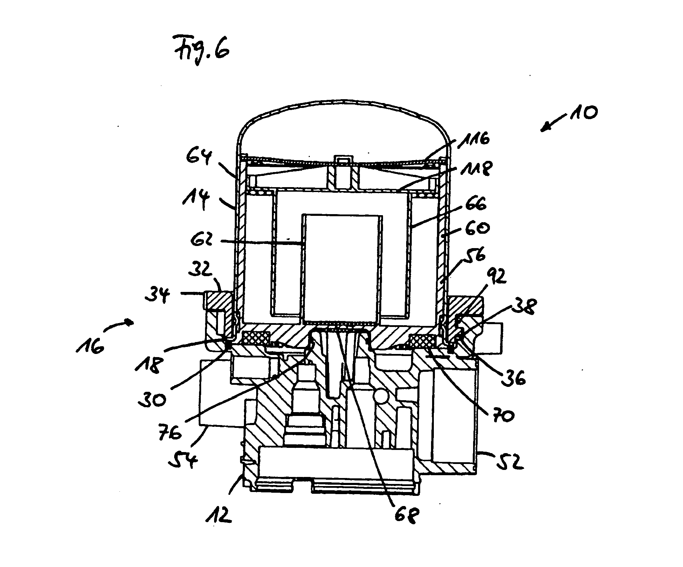

Figur 6 zeigt eine zweite Ausführungsform einer erfindungsgemäßen Druckluftversorgungseinrichtung in geschnittener Darstellung. Anders als bei der bisher beschriebenen Ausführungsform enthält der die Lufttrocknerpatrone 14 mit dem Ventilgehäuse 12 verbindende Bajonettverschluss 16 einen Innenbajonettring 32. Der Innenbajonettring 32 ist über die Lufttrocknerpatrone 14 geführt und über Rastnasen 90 an der Innenfläche des Innenbajonettrings 32 und entsprechende Ausnehmungen 88 am Gehäuse 64 der Lufttrocknerpatrone gegen diese verdrehgesichert. Der Innenbajonettring 32 hat einen sich nach außen erstreckenden Kragen 34 und dazu axial versetzte, sich nach außen erstreckende Vorsprünge 36. Die Vorsprünge 36 weisen Schrägen auf, die in Ausnehmungen 38 eines teilweise außerhalb des Innenbajonettrings 32 liegenden Teils des Ventilgehäuses 12 eingreifen, um mit dem die Ausnehmungen 38 einseitig begrenzenden sich radial nach innen erstreckenden Vorsprüngen 92 zusammenzuwirken. Zu diesem Zweck weisen die Vorsprünge 92 ebenfalls Schrägen auf, die eine kraftschlüssige Verbindung zwischen den Vorsprüngen 92 des Ventilgehäuses 12 und den Vorsprüngen 36 des Innenbajonettrings 32 durch eine relative Drehung von Innenbajonettring 32 und Ventilgehäuse 12 zur Verfügung stellt. Durch das Verschließen des Bajonettverschlusses 16 entsteht eine axial wirkende Kraft, die über den Kragen 18 der Lufttrocknerpatrone 14 auf eine Dichtung 30 wirkt; diese Dichtung wirkt andererseits mit dem Ventilgehäuse 12 zusammen. Eine weitere Dichtung 76 ist als Radialdichtung ausgebildet, d. h. insbesondere als O-Ring. Sie dichtet das Ventilgehäuse 12 gegen die vorzugsweise aus Kunststoff bestehende Trockenmittelbox 56 ab.

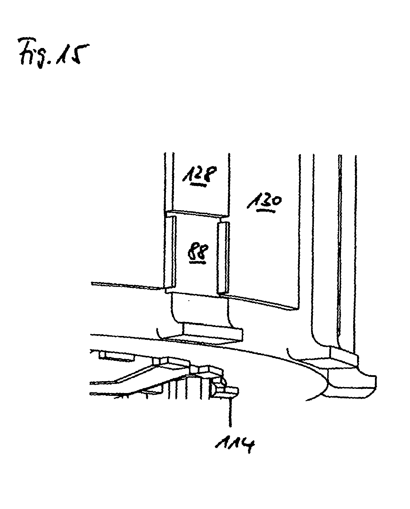

Mit dem so aufgebauten und gedichteten System ist wiederum eine effiziente und effektive Lufttrocknung möglich, indem über den Eingang 52 des Ventilgehäuses 12 Druckluft einströmt, sich über Luftkanäle im Ventilgehäuse 12 verteilt und über einen vorzugsweise als Koaleszenzfilter ausgebildeten Vorfilter 70 in die Lufttrocknerpatrone 14 bzw. die darin angeordnete Trockenmittelbox 56 strömt. Die Trockenmittelbox 56 umfasst wiederum ein äußeres nach oben offenes Rohrstück 60 und ein inneres nach oben geöffnetes Rohrstück 62 auf. Zwischen dem äußeren Rohrstück 60 und dem inneren Rohrstück 62 ist ein weiteres Rohrstück 66 angeordnet, das nach unten offen ist und vorzugsweise aus Metall besteht. Dieses metallische Rohrstück 66 wird von einer Kompressionseinrichtung 118 gehalten, die von einer Federeinrichtung 116 mit Kraft beaufschlagt wird. Durch diese Federkraft wird das in der Trockenmittelbox vorgesehene als Trockenmittel wirkende Granulat dicht gepackt. Die aus dem Vorfilter 70 ausströmende Luft strömt außerhalb des äußeren Rohrstückes 60, d. h. zwischen dem äußeren Rohrstück 60 und dem Gehäuse 64 der Lufttrocknerpatrone 14 durch nicht dargestellte axiale Kanäle, die zwischen den zu erkennenden Anlagebereichen der Trockenmittelbox 56 angeordnet sind, nach oben. Zur weiteren Veranschaulichung dieser Luftführungen wird auf Figur 15 hingewiesen. Die Luft umströmt das offene Ende des äußeren Rohrstücks 60, tritt in den trockenmittelfreien Raum oberhalb der Kompressionseinrichtung 118 ein und strömt nachfolgend zwischen dem nach unten geöffneten Rohrstück 66 und dem äußeren Rohrstück 60 nach unten, um dann wiederum seine Strömungsrichtung umzukehren und zwischen dem inneren Rohrstück 62 und dem nach unten geöffneten Rohrstück 66 nach oben zu strömen. Nach nochmaliger Strömungsumkehr strömt die zu trocknende Luft dann in das innere Rohrstück 62 ein, um dieses dann nach unten durch einen als Staubfilter wirkenden Filtervlies 68 in das Ventilgehäuse 12 zu verlassen. Getrocknete Luft wird dann über den Ausgang 54 abgeführt.

Die Trockenmittelbox 56 und der freie Bereich zwischen Trockenmittelbox 56 und Gehäuse 64 sind vollständig mit Granulat gefüllt. Dieses kann einheitlich ausgebildet sein. Besonders nützlich kann auch sein, verschiedene Arten von Trockenmittel in die Trockenmittelbox 56 einzubringen. So kann das anfänglich durchströmte Trockenmittel für eher feuchte Luft optimiert sein, während das Trockenmittel im Ausströmbereich für die Restentfeuchtung schon vorgetrockneter Luft optimiert ist.

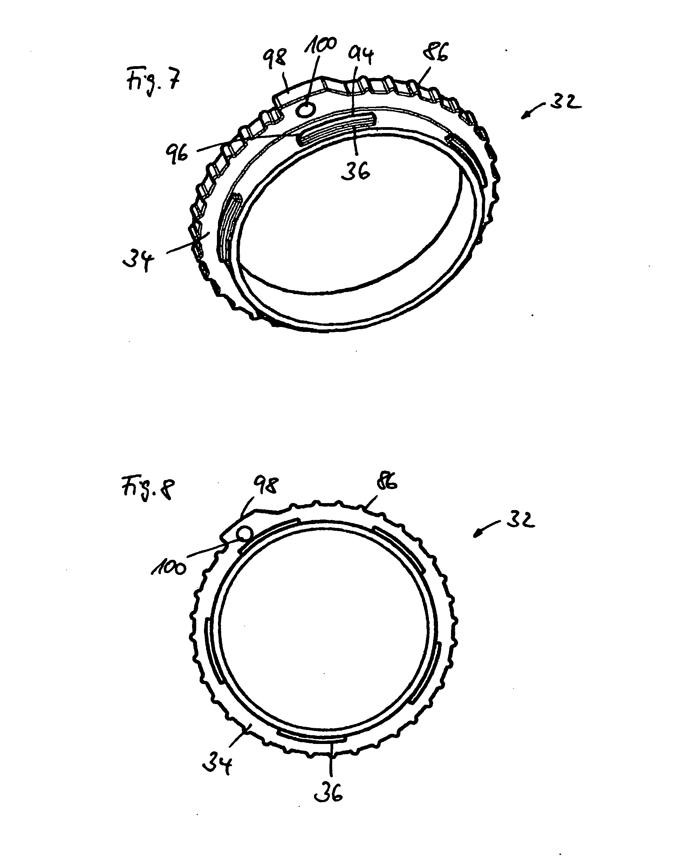

Figur 7 zeigt eine perspektivische Darstellung eines Innenbajonettrings. Figur 8 zeigt eine Draufsicht eines Innenbajonettrings. Der Innenbajonettring 32 hat eine gewellte äußere Oberfläche 86, was die Handhabbarkeit beim Verdrehen des Innenbajonettrings 32 verbessert. Die gewellte äußere Oberfläche ist am nach außen gerichteten Kragen 34 des Innenbajonettrings 32 angeordnet. Axial versetzt zum Kragen 34 sind Vorsprünge 36 vorgesehen, die ebenfalls nach außen gerichtet sind, und die für die Bajonettfunktion erforderliche Neigung der dem Kragen 34 zugewandten Oberfläche 94 aufweisen. Diese Neigung kann beispielsweise 1,5° betragen. Zur Erleichterung der anfänglichen Drehbewegung beim Verschließen des Bajonettverschlusses sind Anlaufschrägen 96 vorgesehen, die eine deutlich größere Neigung aufweisen, beispielsweise 30°. Die Vorsprünge 36 können vorteilhafterweise einen Anschlag aufweisen, um die Schließbewegung des Bajonettverschlusses zu begrenzen. An einem Ansatz 98 am Kragen 34 ist eine axiale Bohrung 100 zu erkennen, die zur Aufnahme des im Zusammenhang mit Figur 3 detailliert beschriebenen Sicherungselementes 42 aufweist. Bei der Anwendung sitzt das Sicherungselement 42 fest in dieser Bohrung 100, um mit seiner Nase dann in eine das Abströmen von Druckluft aus der Druckluftversorgungseinrichtung 10 ermöglichende Bohrung im Ventilgehäuse 12 einzurasten. Somit wird auch im Zusammenhang mit der Innenbajonettlösung die vorteilhafte Kombination aus Druckluftablasseinrichtung und Rasteinrichtung zur Verfügung gestellt.

Die im Zusammenhang mit den Figuren 1 bis 8 beschriebenen Ausführungsformen der vorliegenden Erfindung enthalten Lufttrocknerpatronen die als offene Systeme ausgelegt sind. Dies bedeutet, dass die Lufttrocknerpatrone direkt am Ventilgehäuse über eine Dichtung abdichtet, das heißt insbesondere ohne zwischengelagerten Flansch.

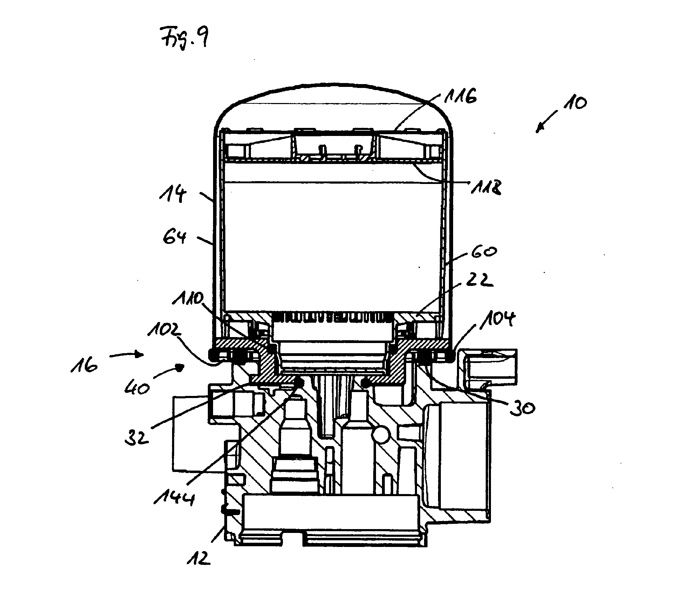

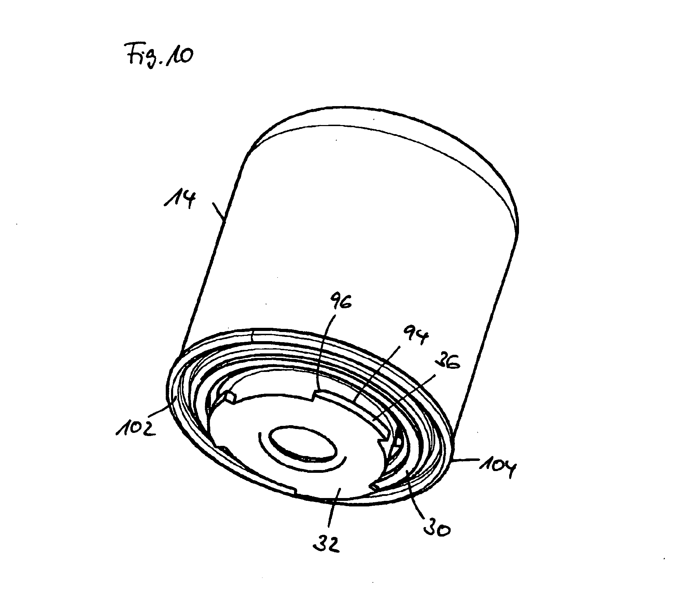

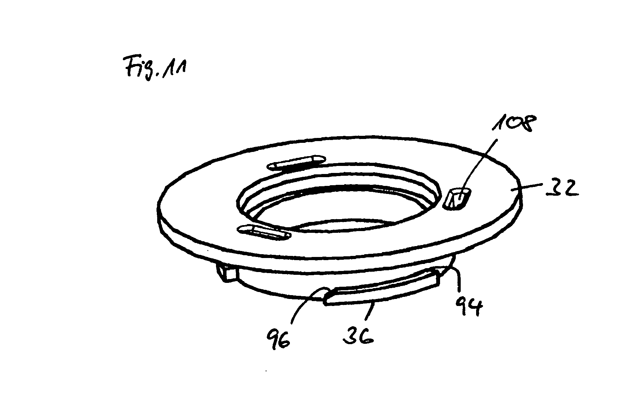

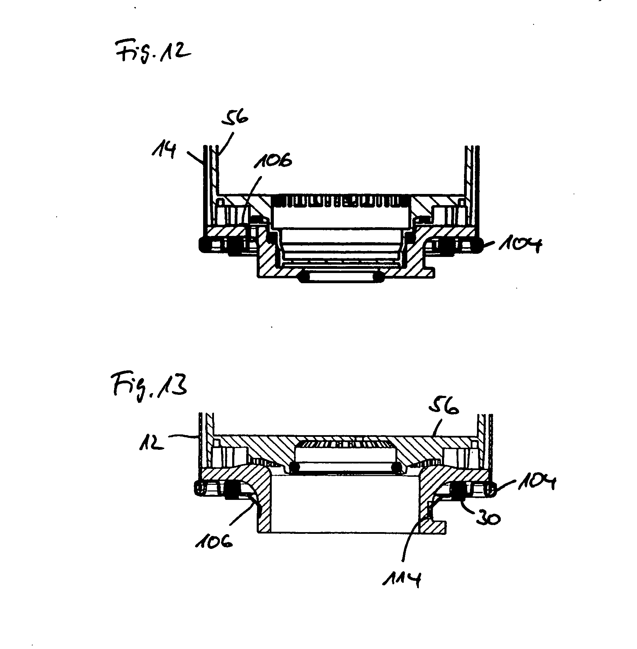

Figur 9 zeigt eine dritte Ausführungsform einer erfindungsgemäßen Druckluftversorgungseinrichtung in geschnittener Darstellung. Figur 10 zeigt eine perspektivische Darstellung einer Lufttrocknerpatrone mit Fußflansch und Innenbajonettring. Figur 11 zeigt eine perspektivische Darstellung eines Innenbajonettrings mit Fußflanschfunktion. Figur 12 zeigt eine Schnittansicht eines Teils einer erfindungsgemäßen Druckluftversorgungseinrichtung zur Erläuterung einer ersten Montageart eines Fußflansches und Figur 13 zeigt eine Schnittansicht eines Teils einer erfindungsgemäßen Druckluftversorgungseinrichtung zur Erläuterung einer zweiten Montageart eines Fußflansches. Das in diesen Figuren dargestellte System enthält eine geschlossene Lufttrocknerpatrone 14. Von geschlossenen Lufttrocknerpatronen 14 ist die Rede, wenn deren Gehäuse 64 nicht direkt am Ventilgehäuse 12 abdichtet, sondern ein Fußflansch 40 vorgesehen ist. Der Fußflansch 40 ist mit einem Innenbajonettring 32 kombiniert, der im Hinblick auf seine die Bajonettwirkung zur Verfügung stellende Ausgestaltung mit dem im Zusammenhang mit den Figuren 6 bis 8 beschriebenen Innenbajonettring vergleichbar ist. Ebenso weist das Ventilgehäuse 12 bezogen auf den Bajonettverschluss 16 eine vergleichbare Ausgestaltung auf, wie das im Zusammenhang mit Figur 6 beschriebene Ventilgehäuse 12. Der Innenbajonettring 32 ist über einen Deckel 102 mit dem Gehäuse 64 der Lufttrocknerpatrone 14 verbunden. Die Verbindung des Deckels 102 mit dem Gehäuse 64 der Lufttrocknerpatrone erfolgt über einen Bördelrand 104. Der Fußflansch 40 wirkt über eine Dichtung 30, die an dem Deckel 102 anliegt, mit dem Ventilgehäuse 12 zusammen, wobei die abdichtende Kraft in axiale Richtung wirkt. Eine weitere radial wirkende Dichtung 144 ist zwischen dem Ventilgehäuse 12 und dem Innenbajonettring 32 vorgesehen. Ebenfalls ist eine Radialdichtung 110 zwischen der Trockenmittelbox 56 und dem Innenbajonettring 32 angeordnet. Das so aufgebaute und abgedichtete System ermöglicht ein Einströmen von Druckluft in den Eingang 52, eine Überleitung der Druckluft in den Bereich zwischen der Trockenmittelbox 56 und dem Gehäuse 64 der Lufttrocknerpatrone 14, eine Umlenkung der Luft in den zentralen mit Trockenmittel gefüllten Bereich der Trockenmittelbox 56 und ein nachfolgendes Abströmen der getrockneten Luft aus der Lufttrocknerpatrone 14 in das Ventilgehäuse 12, aus dem die getrocknete Luft dann über den Ausgang 54 entnommen werden kann. Die Kompression des in der Trockenmittelbox 56 vorhandenen Trockenmittels erfolgt über eine eine Kompressionseinrichtung 118 beaufschlagende Federeinrichtung.

Gemäß den Figuren 11 und 12 erfolgt die Verbindung des Deckels 102 mit dem Innenbajonettring 32 durch das Eingreifen von Laschen 106 in dafür im Innenbajonettring 32 vorgesehene Öffnungen 108 zur Verfügung gestellt.

Im Hinblick auf die Befestigung des Deckels 102 am Innenbajonettring 32 zeigt Figur 13 eine Variante. Hier greifen Laschen 106 nicht in Öffnungen 108 des Innenbajonettrings 32 ein. Vielmehr liegen diese in Nuten 114 des Innenbajonettrings 32. Diese Nuten 114 sind am Umfang des Innenbajonettringes so angeordnet, dass sie nicht mit den für die Bajonettfunktion erforderlichen Vorsprüngen interferieren.

Die Trockenmittelbox 56 gemäß Figur 9 hat einen grundsätzlich anderen Aufbau als die im Zusammenhang mit den Figuren 1, 2 und 6 beschriebenen Trockenmittelboxen 56. Während letztere ein viergängiges Labyrinth bilden, hat die Trockenmittelbox 56 gemäß Figur 9 keinen solchen labyrinthartigen Aufbau. Es ist zu bemerken, dass das geschlossene System gemäß Figur 9 ohne weiteres ebenfalls mit einer Trockenmittelbox 56 mit labyrinthartigen Aufbau, wie dieser in den Figuren 1, 2 und 6 gezeigt ist, kombinierbar ist. Gleiches gilt umgekehrt, denn für die offenen System gemäß den Figuren 1, 2 und 6 ist die Verwendung labyrinthartiger Trockenmittelboxen nicht zwingend.

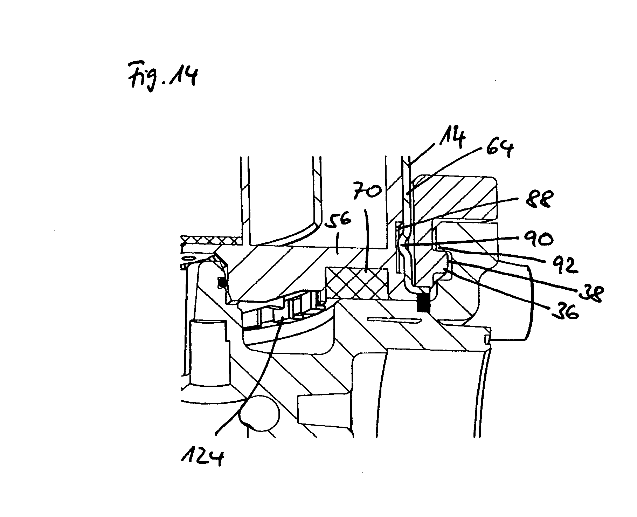

Figur 14 zeigt einen Teil einer erfindungsgemäßen Druckluftversorgungseinrichtung in geschnittener Darstellung. In dieser Darstellung ist die Verbindung zwischen dem Gehäuse 64 der Lufttrocknerpatrone 14 und der Trockenmittelbox 56 deutlich zu erkennen. Eine Rastnase 90 ist in einer Ausnehmung 88 angeordnet. Weiterhin sind Halter 124 zum Halten des Vorfilters 70 gezeigt.

Figur 15 zeigt einen Teil einer Trockenmittelbox 56 in perspektivischer Darstellung. Hier sind die Ausnehmungen 88 sowie die Halter 124 ebenfalls zu erkennen. Weiterhin erkennt man Bereiche 128, die gegenüber benachbarten Bereichen 130 einen vergrößerten Durchmesser aufweisen. Die Bereiche 128 liegen bei in das Gehäuse 64 der Lufttrocknerpatrone 14 eingesetzter Trockenmittelbox 56 an dem Gehäuse 64 an. Die Bereiche 130 dienen dann als Kanäle, um die Druckluft beim Einströmen in die Lufttrocknerpatrone 14 nach oben zu leiten.

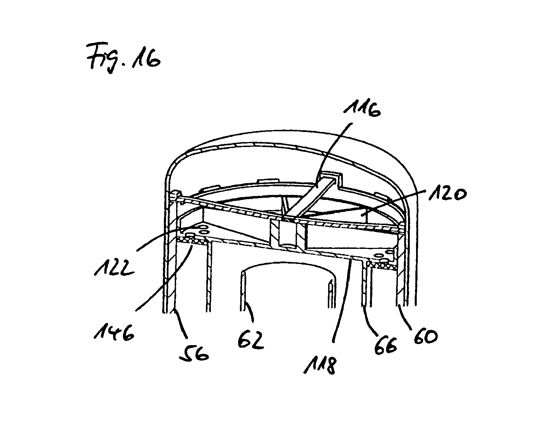

In Figur 16 zeigt eine perspektivische geschnittene Darstellung eines Teils einer erfindungsgemäßen Lufttrocknerpatrone. Eine Federeinrichtung 116 ist an der Trockenmittelbox 56 befestigt, wobei die Verbindung vorzugsweise spritztechnisch realisiert ist. Die Federeinrichtung 116 besteht aus zwei sich kreuzenden federnden Elementen, die in der Mitte der Anordnung miteinander verbunden sind. Dort beaufschlagen sie eine Kompressionseinrichtung 118 nach unten mit Kraft, um diese so in die Trockenmittelbox 56 hinein zu treiben. Alternativ könnte eine beispielsweise zentral angeordnete Spiralfeder vorgesehen sein, die sich am Gehäuse 64 der Lufttrocknerpatrone 14 abstützt. Die Kompressionseinrichtung 118 ist durch eine Mehrzahl von Stegen 120 stabilisiert, und sie weist Durchgangslöcher 122 auf, die einen Übertritt der oberhalb der Kompressionseinrichtung 118 anwesenden Luft in den Kanal zwischen dem äußeren Rohrstück 60, welches Bestandteil der Trockenmittelbox 56 ist, und dem Rohrstück 66 zu erlauben, das mit der Kompressionseinrichtung 118 in Verbindung steht. In diesem Kanal ist eingangsseitig ein Filter 146 angeordnet, das von der Luft bei ihrem Eintritt in den Kanal durchströmt wird.

Figur 17 zeigt eine Trockenmittelbox 56 in perspektivischer Darstellung. Diese Trockenmittelbox 56 kann beispielsweise bei den im Zusammenhang mit der anhand der Figuren 1 und 2 beschriebenen Ausführungsform der erfindungsgemäßen Druckluftversorgungseinrichtung 10 zum Einsatz kommen. In der zentralen Öffnung 132 der Trockenmittelbox 56 kann die in Figur 1 dargestellte Feder 58 eindringen, um die Trockenmittelbox 56 in Richtung der Lufttrocknerpatrone 14 mit Kraft zu beaufschlagen. Am Umfang der Trockenmittelbox 56 sind mehrere Federlaschen 134 angeordnet, die sich in das Gehäuse 64 der Lufttrocknerpatrone 14 einkrallen, und so ebenfalls eine axial nach oben gerichtete Kraft auf die Trockenmittelbox 56 ausüben. Bei geeigneter Auslegung der Federlaschen 134 kann auf die in die Öffnung 132 eindringende Feder 58 unter Umständen verzichtet werden, was den Zusammenbau der Druckluftversorgungseinrichtung 10 erleichtert. Im Bereich des Umfangs der Trockenmittelbox 56 ist eine Vielzahl von Öffnungen 136 vorgesehen, über die die Druckluft in das Trockenmittel einströmt. Innerhalb der Öffnung 132 ist eine Mehrzahl von Öffnungen 142 erkennbar, durch die Druckluft aus der Trockenmittelbox 56 ausströmen kann. Es sind weiterhin Halter 124 zum Halten des Vorfilters 70 zu erkennen. Weiter innen sind Rückschlagventile 138 angeordnet, über die die Trockenmittelbox gespült werden kann. Die Rückschlagventile liegen direkt unterhalb von dem mit Trockenmittel gefüllten Bereich, wobei vorzugsweise ein Filtervlies 68 die Rückschlagventile 138 gegen das Trockenmittel abschirmt. Die Trockenmittelbox 56 weist weiterhin eine Öffnung 140 auf. In diese Öffnung 140 dringt beim Aufsetzen der Lufttrocknerpatrone 14 auf das Ventilgehäuse 12 ein mit dem Ventilgehäuse in Verbindung stehender Zapfen ein. Dieser Zapfen dient zur Vorzentrierung der Lufttrocknerpatrone 14 relativ zum Ventilgehäuse 12 und zur Verdrehsicherung der Komponeten gegeneinander. Der Zapfen am Ventilgehäuse hat vorzugsweise eine solche Länge, dass dieser bei der Montage der Lufttrocknerpatrone 14 den ersten Kontakt zwischen dem Ventilgehäuse 12 und der Lufttrocknerpatrone 14 zur Verfügung stellt. Die Öffnung 140, in die der Zapfen des Ventilgehäuses eindringen kann, ist hier als Öffnung in der Trockenmittelbox dargestellt. Ebenfalls ist es möglich, eine solche Öffnung oder eine sonstige vergleichbar wirkende Einrichtung in einem Fußflansch einer Lufttrocknerpatrone vorzusehen, womit auch die geschlossenen Systeme durch die vorliegende Erfindung verbessert werden können.

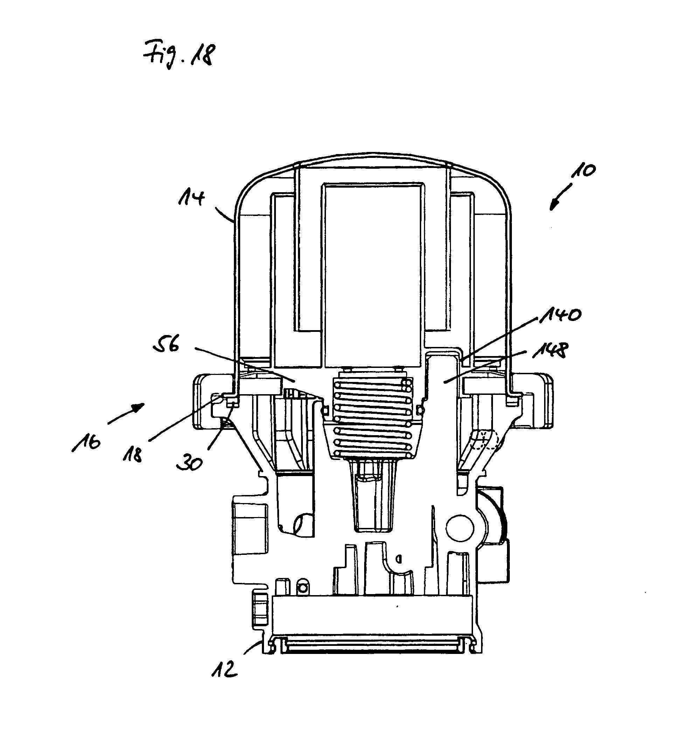

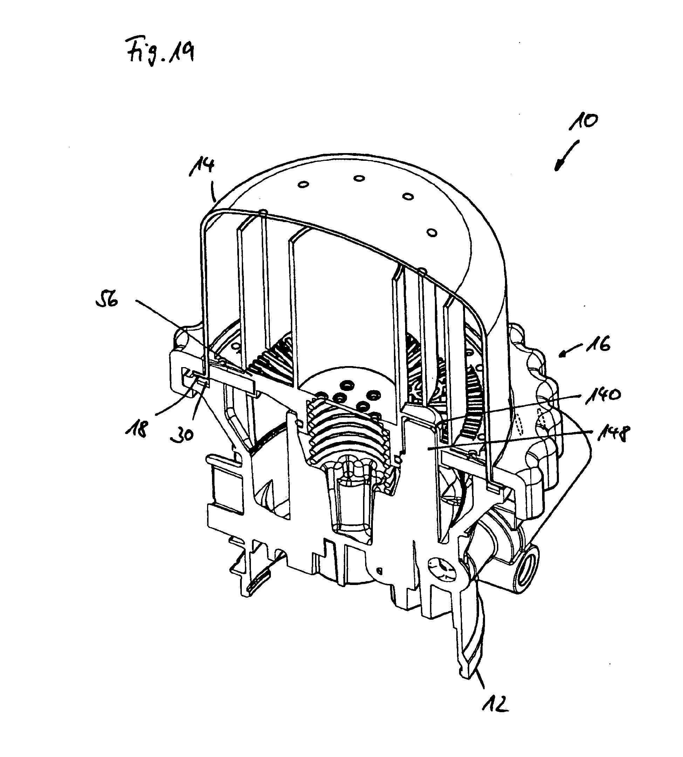

Figur 18 zeigt eine Schnittansicht einer erfindungsgemäßen Druckluftversorgungseinrichtung. Figur 19 zeigt eine perspektivische geschnittene Darstellung einer erfindungsgemäßen Druckluftversorgungseinrichtung. Hier ist der an dem Ventilgehäuse 12 angeordnete Zapfen 148 erkennbar. Er ragt in die Öffnung 140 der Trockenmittelbox 56 hinein, wodurch eine formschlüssige Verbindung zwischen dem Ventilgehäuse 12 und der Lufttrocknerpatrone 14 zur Verfügung gestellt wird. Da die dichte Kopplung der Lufttrocknerpatrone 14 mit dem Ventilgehäuse 12 durch den Bajonettverschluss 16 zur Verfügung gestellt wird, also insbesondere ohne Verdrehen der Lufttrocknerpatrone 14 gegenüber dem Ventilgehäuse 12, behindert die exzentrische Verbindung von Ventilgehäuse 12 und Lufttrocknerpatrone 14 durch den Zapfen 148 und die Öffnung 140 das Zusammenfügen der beiden Komponenten nicht. Vielmehr liefern diese Einrichtungen 148 ,140 noch eine Montagehilfe beim Zusammenführen, und es wird eine Verdrehsicherung der Lufttrocknerpatrone 14 gegenüber dem Ventilgehäuse 12 zur Verfügung gestellt. Somit erfolgt kein unerwünschtes Verschieben des Kragens 18 der Lufttrocknerpatrone 14 über die Dichtung 30.

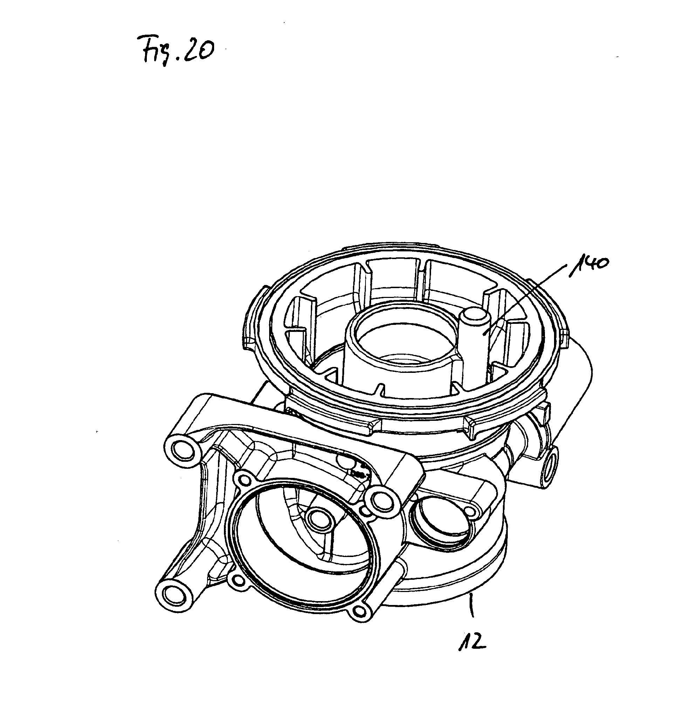

Figur 20 zeigt eine perspektivische Darstellung eines erfindungsgemäßen Ventilgehäuses. Hier ist der Zapfen 140 als vorstehendes Bauteil erkennbar.

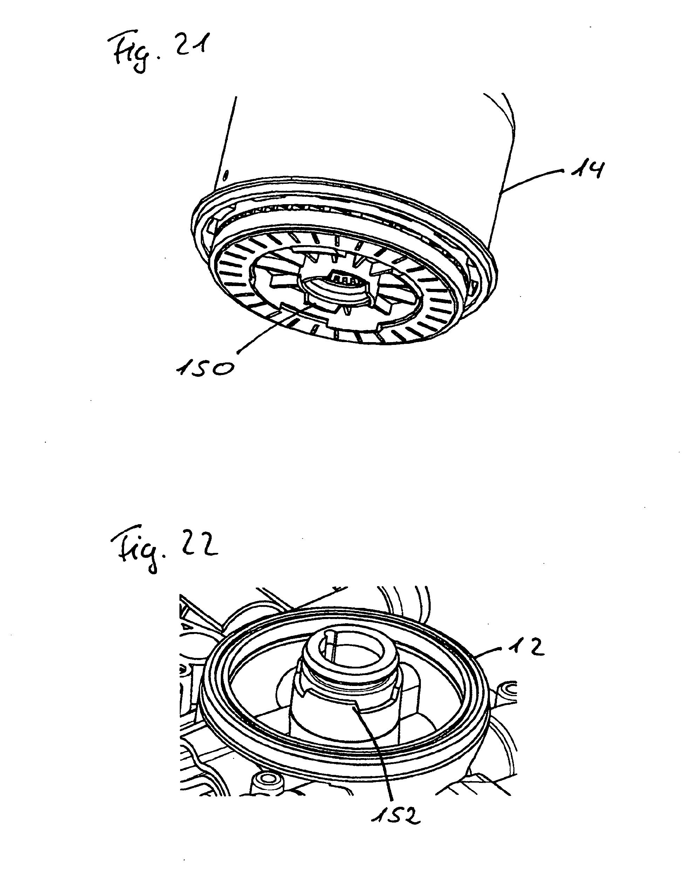

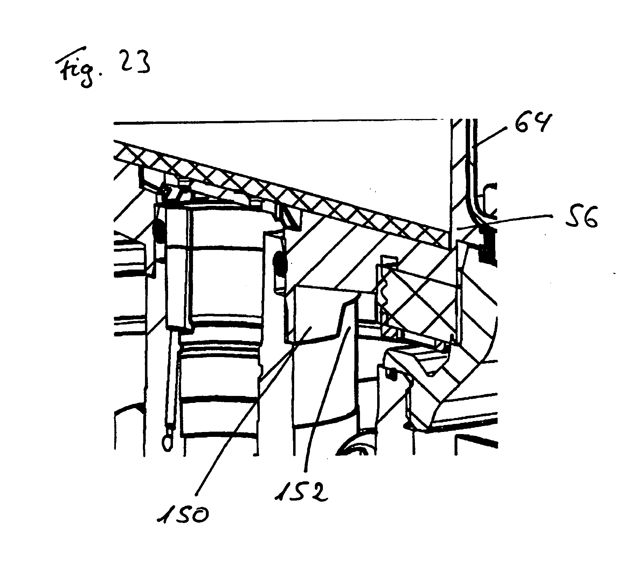

Figuren 21, 22 und 23 beschreiben eine Möglichkeit für die Verwendung einer Verzahnung zwischen Lufttrocknerpatrone 14 und Ventilgehäuse 12 zur Vorzentrierung und Verdrehsicherung. Die Verzahnung 150 an der Lufttrocknerpatrone 14 stellt das Negativ der Verzahnung 152 an dem Ventilgehäuse 12 dar. Wird die Lufttrocknerpatrone 14 auf das Ventilgehäuse aufgesetzt, so kann sie nicht montiert werden, wenn zwei Zähne der Verzahnungen 150, 152 aufeinander treffen beziehungsweise miteinander unverträgliche Verzahnungen 150, 152 einander begegnen. Hierdurch wird eine Montage verhindert, da der Abstand zwischen der Lufttrocknerpatrone 14 und dem Ventilgehäuse 12 zu groß ist. Treffen die einzelnen Zähne der Verzahnungen 150, 152 nicht aufeinander, so verringert sich der Abstand zwischen der Lufttrocknerpatrone 14 und dem Ventilgehäuse 12 und eine Montage wird möglich. Stimmen die Verzahnungen 150, 152 von Lufttrocknerpatrone 14 und Ventilgehäuse 12 nicht überein, obwohl eine Montage möglich ist, so entsteht durch die vorhandenen Zwischenräume eine Undichtigkeit, die durch die Druckluftversorgungseinrichtung detektiert werden kann. Eine ähnliche Verzahnung in äußeren Bereich von Ventilgehäuse 12 und Lufttrocknerpatrone 14 ist ebenfalls denkbar und kann den gleichen Zweck erfüllen.

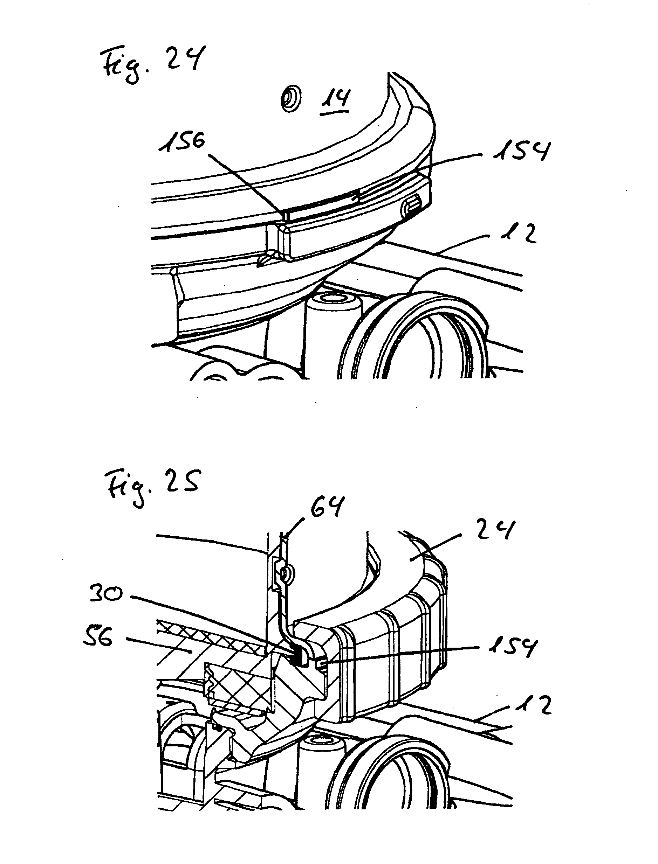

Figuren 24 und 25 zeigen eine erfindungsgemäße Druckluftversorgungseinrichtung, bei der eine Nase 154 und eine Ausnehmung 156 am äußeren Rand der Aufsatzfläche vorhanden ist. Die Ausnehmung 156 ist so in dem Gehäuse 64 der Lufttrocknerpatrone 14 angeordnet, dass sie die Dichtung 30 teilweise freilegt. Falls das Ventilgehäuse 12 keine für die Ausnehmung 156 geeignete Nase 154 aufweist, liegt die Dichtung 30 nach der Montage der Lufttrocknerpatrone teilweise frei. Durch Beaufschlagung der Dichtung 30 mit Druck bei Inbetriebnahme der Druckluftversorgungseinrichtung 10 entsteht nun eine Undichtigkeit, da die Dichtung 30 in dem freiliegenden Bereich weder von dem Gehäuse 64 der Lufttrocknerpatrone 14 noch von der Nase 154 abgestützt werden kann. Im umgekehrten Fall, in dem die Lufttrocknerpatrone 14 keine Ausnehmung 156 aufweist, kann eine Montage nicht vorgenommen werden, da die an dem Ventilgehäuse 12 vorhandene Nase 154 die Lufttrocknerpatrone 14 auf Abstand hält. Die Inbetriebname der Druckluftversorgungseinrichtung ist daher nur mit einer Lufttrocknerpatrone 14 möglich, die eine zu der an dem Ventilgehäuse 12 angebrachten Nase 154 passende Ausnehmung 156 aufweist. Die gleichzeitige Verwendung mehrerer Nasen 154 und zugehöriger Ausnehmungen 156 ist denkbar.

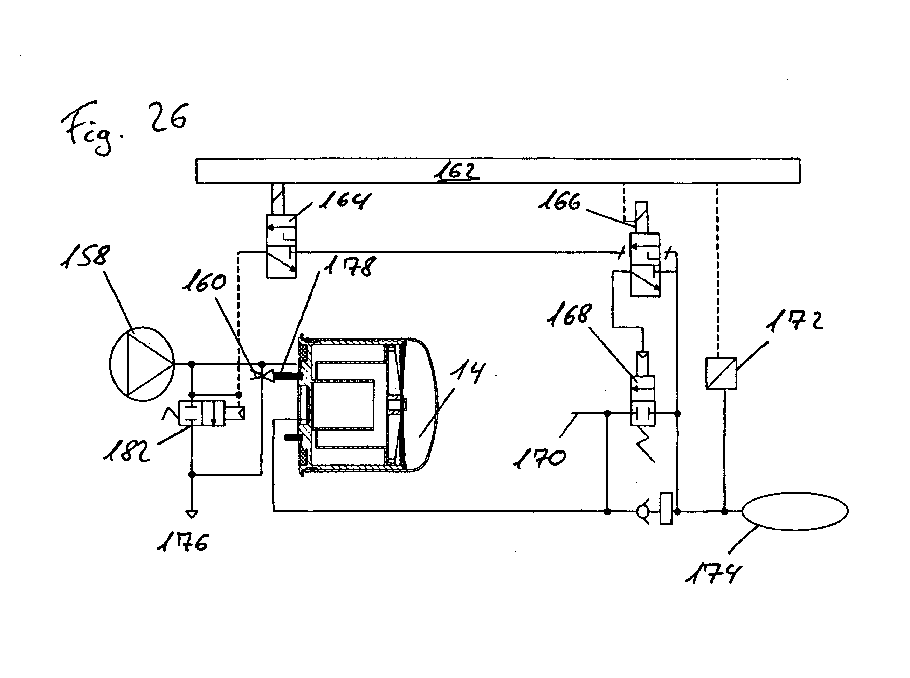

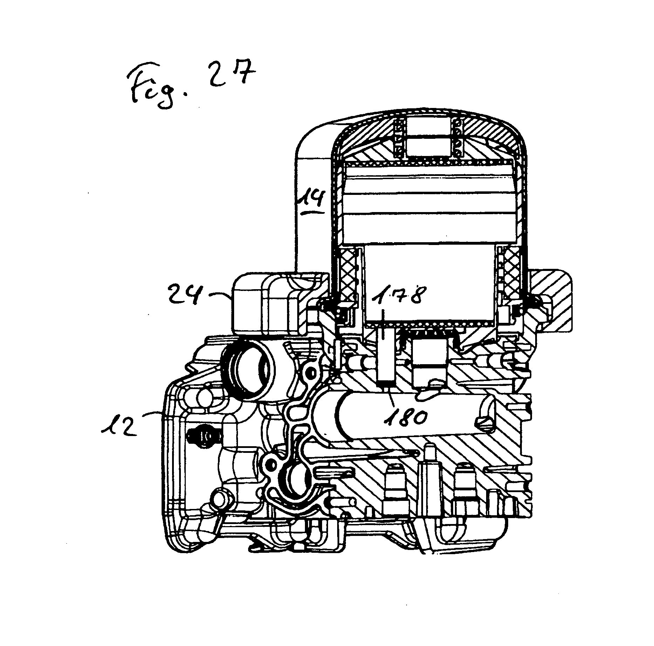

Figuren 26 und 27 zeigen Darstellungen einer weiteren Ausführungsform einer erfindungsgemäßen Druckluftversorgungseinrichtung. Die schematisch vereinfachte Darstellung der Druckluftversorgungsanlage in Figur 26 umfasst einen Kompressor 158, eine ECU 162 zur Steuerung des Systems, ein als Druckregler eingesetztes Elektromagnetventil 164, ein als Regenerationsventil eingesetztes Elektromagnetventil 166, ein Boosterventil 168, einen Drucksensor 172, einen Vorratsbehälter/Verbraucher 174,eine Luftfilterpatrone 14 und eine Entlüftung 176, die über eine absperrbare Drossel 160 eine Verbindung mit einem Zapfen mit einem Gummiventilsitz 178 herstellt. Weiterhin ist ein Ablassventil 182 vorgesehen, welches zur Regeneration der Luftfilterpatrone 14 benötigt wird.

Im Unterschied zu den bisherigen Ausführungsformen wird eine Inbetriebnahme der Druckluftversorgungseinrichtung bei dieser Ausführungsform durch die Konstruktion des Zapfens 178 selbst verhindert. Der Zapfen ist hohl und weist an einem Ende einen Gummiventilsitz auf, der mit einer Entlüftungsbohrung gekoppelt ist und als 2/2-Wegeventil arbeitet. Die Entlüftungsbohrung stellt wiederum eine Verbindung zur Entlüftungsvorrichtung der Druckluftversorgungsanlage bereit. Das heißt, dass im Falle einer Undichtigkeit der Verbindung zwischen dem Zapfen 178 und der ihn aufnehmenden Ausnehmung, ein Druckaufbau in der Druckluftversorgungseinrichtung durch die Entlüftungsbohrung 180 verhindert wird, da dann der Gummiventilsitz nicht verschlossen wird. Dies tritt üblicherweise nur auf, wenn eine falsche, d.h. mechanisch nicht passende Luftfilterpatrone 14 verbaut werden soll. Da der Druckverlust über die Entlüftungseinrichtung 176 der Druckluftversorgungseinrichtung realisiert ist, arbeitet diese Ausführungsform beim Druckabbau deutlich leiser als die vorhergehende.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Druckluftversorgungseinrichtung
- 12: Ventilgehäuse
- 14: Lufttrocknerpatrone
- 16: Bajonettverschluss
- 18: Kragen
- 20: Kragenabschnitt
- 22: Basis
- 24: Außenbajonettring
- 28: Ausnehmung
- 30: Dichtung
- 32: Innenbajonettring
- 34: Kragen
- 36: Vorsprung
- 38: Ausnehmung
- 40: Fußflansch
- 42: Sicherungselement
- 44: Öffnung
- 46: Öffnung
- 48: Nase
- 50: Feder
- 52: Eingang
- 54: Ausgang
- 56: Trockenmittelbox
- 58: Feder
- 60: äußeres Rohrstück
- 62: inneres Rohrstück
- 64: Gehäuse
- 66: Rohrstück
- 68: Filtervlies
- 70: Vorfilter
- 72: Kanal
- 74: Kanal
- 76: Dichtung
- 78: Kragen
- 80: Vorsprung
- 82: Dichtung
- 84: Sicherungselementhalter
- 86: gewellte Oberfläche
- 88: Ausnehmung
- 90: Rastnase
- 92: Vorsprung
- 94: Oberfläche
- 96: Anlaufschräge
- 98: Ansatz
- 100: Bohrung
- 102: Deckel
- 104: Bördelrand
- 106: Lasche
- 108: Öffnung
- 110: Radialdichtung
- 114: Nut
- 116: Federeinrichtung
- 118: Kompressionseinrichtung
- 120: Steg
- 122: Durchgangsloch
- 124: Halter
- 128: Bereich
- 130: Bereich
- 132: Öffnung
- 134: Federlasche
- 136: Öffnung
- 138: Rückschlagventil
- 140: Öffnung
- 142: Öffnung
- 144: Dichtung
- 146: Filter
- 148: Zapfen
- 150: Verzahnung an Lufttrocknerpatrone
- 152: Verzahnung an Ventilgehäuse
- 154: Nase
- 156: Ausnehmung
- 158: Kompressor
- 160: absperrbare Drosselstelle
- 162: ECU
- 164: Elektromagnetventil/Druckregler
- 166: Elektromagnetventil/Regenerationsventil
- 168: 2/2-Wegeventil/Boosterventil
- 170: Anschluss ESS
- 172: Drucksensor
- 174: Vorratsbehälter/Verbraucher
- 176: Entlüftung
- 178: Zapfen mit Gummiventilsitz
- 180: Entlüftungsbohrung
- 182: Ablassventil

## Patentansprüche

1. Druckluftversorgungseinrichtung (10) für ein Nutzfahrzeug, mit einem Ventilgehäuse (12) und einer mit dem Ventilgehäuse verbundenen, im Wesentlichen axialsymmetrischen, wechselbaren Lufttrocknerpatrone (14), wobei das Ventilgehäuse und die Lufttrocknerpatrone über eine im Wesentlichen kreisförmige Dichtung (30) miteinander verbunden sind, die in einer Ebene senkrecht zur Achse der Lufttrocknerpatrone liegt, wobei das Ventilgehäuse (12) und die Lufttrocknerpatrone (14) durch achsparalleles Zusammenführen miteinander koppelbar sind, wobei das Ventilgehäuse und die Lufttrocknerpatrone Einrichtungen (104, 148) aufweisen, die eine dichte Verbindung zwischen dem Ventilgehäuse und der Lufttrocknerpatrone nicht in allen mit Bezug auf die Achse der Lufttrocknerpatrone definierten Winkelpositionen der
Lufttrocknerpatrone gegenüber dem Ventilgehäuse zulassen, und wobei die Einrichtungen einen mit Abstand von der Achse an dem Ventilgehäuse angeordneten exzentrischen Vorsprung (148) und eine Ausnehmung (140) an der Lufttrocknerpatrone umfassen, in die der Vorsprung im verbunden Zustand hineinragt.

2. Druckluftversorgungseinrichtung (10) nach Anspruch 1, **dadurch gekennzeichnet, dass** der Vorsprung (148) zumindest teilweise formschlüssig in die Ausnehmung (140) hineinragt.

3. Druckluftversorgungseinrichtung (10) nach Anspruch 1 oder 2, **dadurch gekennzeichnet, dass** die Einrichtungen gezahnte Bereiche an dem Ventilgehäuse und der Lufttrocknerpatrone umfassen, die nur in vorgegebenen Winkelpositionen ein dichtes Zusammenfügen von Ventilgehäuse und Filterpatrone gestatten.

4. Druckluftversorgungseinrichtung (10) nach einem der vorangehenden Ansprüche, **dadurch gekennzeichnet, dass** das Ventilgehäuse (12) und die Lufttrocknerpatrone (14) über einen Bajonettverschluss (16) miteinander verbunden sind.

5. Druckluftversorgungseinrichtung nach Anspruch 4, **dadurch gekennzeichnet, dass** die Lufttrocknerpatrone (14) und das Ventilgehäuse (12) zumindest abschnittsweise jeweils einen sich im Wesentlichen radial nach außen erstreckenden Kragen (18, 20) aufweisen, wobei durch mindestens einen dieser Krägen Abschnitte (20) gebildet sind, die eine in Schließrichtung des Bajonettverschlusses zunehmende axiale Kragendicke aufweisen, und dass ein über die Krägen geführter, von der Lufttrocknerpatrone und dem Ventilgehäuse lösbarer Außenbajonettring (24) vorgesehen ist, der einen sich in radiale Richtung nach innen erstreckenden Kragen (78) und in axiale Richtung dazu versetzte nach innen gerichtete Vorsprünge (80) aufweist, wobei die axiale Breite der Vorsprünge (80) der variablen axialen Kragendicke in der Weise angepasst ist, dass der Bajonettverschluss (16) durch relative Drehung von Außenbajonettring und Ventilgehäuse beziehungsweise Lufttrocknerpatrone schließbar beziehungsweise lösbar ist.

6. Druckluftversorgungseinrichtung nach Anspruch 5, **dadurch gekennzeichnet, dass** der Kragen (20) des Ventilgehäuses (12) mehrere sich in Umfangsrichtung erstreckende Kragenabschnitte (20) mit in Schließrichtung des Bajonettverschlusses (16) zunehmender axialer Kragendicke und mit dazwischen vorgesehenen Ausnehmungen (28) aufweist und dass sich der Kragen (18) der Lufttrocknerpatrone (14) über den gesamte Umfang im Wesentlichen gleichförmig erstreckt und bei geschlossenem Bajonettverschluss über eine Dichtung (30) mit dem Ventilgehäuse zusammenwirkt.

7. Druckluftversorgungseinrichtung nach Anspruch 6, **dadurch gekennzeichnet, dass** die Kragenabschnitte (20) zumindest teilweise einen Anschlag zur Begrenzung der Schließdrehung des Bajonettverschlusses aufweisen.

8. Druckluftversorgungseinrichtung nach einem der Ansprüche 4 bis 7, **dadurch gekennzeichnet, dass** die Lufttrocknerpatrone (14) einen sich im Wesentlichen radial nach außen erstreckenden Kragen (18) aufweist, der durch einen die Lufttrocknerpatrone umgebenden Innenbajonettring (32) im geschlossenen Zustand des Bajonettverschlusses (16) in axiale Richtung mit Kraft beaufschlagbar ist, dass der Innenbajonettring einen sich in radiale Richtung nach außen erstreckenden Kragen (34) und in axiale Richtung dazu versetzte nach außen gerichtete Vorsprünge (36) aufweist, die in Schließrichtung des Bajonettverschlusses zunehmende axiale Vorsprungdicke aufweisen, und dass ein zumindest teilweise radial außerhalb des Innenbajonettrings liegender Teil des Ventilgehäuses sich radial nach außen erstreckende Ausnehmungen (38) aufweist, deren axiale Dicken in der Weise den Vorsprüngen des Ventilgehäuses angepasst sind, dass der Bajonettverschluss durch relative Drehung von Innenbajonettring und Ventilgehäuse (12) schließbar beziehungsweise lösbar ist.

9. Druckluftversorgungseinrichtung nach Anspruch 8, **dadurch gekennzeichnet, dass** die Vorsprünge (36) des Innenbajonettrings zumindest teilweise einen Anschlag zur Begrenzung der Schließdrehung des Bajonettverschlusses (16) aufweisen.

10. Druckluftversorgungseinrichtung nach einem der vorangehenden Ansprüche, **dadurch gekennzeichnet, dass** der Bajonettverschluss (16) einen Bajonettring (24, 32) aufweist, der eine ein Sicherungselement (42) aufnehmende Öffnung (44) hat, wobei das Sicherungselement im geschlossenen Zustand des Bajonettverschlusses in eine Öffnung (46) des Ventilgehäuses (12) einrastet, über die die Druckluftversorgungseinrichtung (10) durch Betätigen des Sicherungselementes entlüftet werden kann.

11. Druckluftversorgungseinrichtung nach Anspruch 10, **dadurch gekennzeichnet, dass** das Sicherungselement (42) eine Nase (48) aufweist, die durch die Kraft einer Feder (50) in die Öffnung (46) des Ventilgehäuses (12) gedrückt wird, wobei die Nase zum Entlüften der Druckluftversorgungseinrichtung (10) und zur Freigabe der öffnungsbewegung des Bajonettverschlusses (16) gegen die Federkraft bewegbar ist.

12. Ventilgehäuse (12) für eine Druckluftversorgungseinrichtung (10), insbesondere nach einem der vorangehenden Ansprüche, wobei das Ventilgehäuse mit einer im Wesentlichen axialsymmetrischen Lufttrocknerpatrone (14) lösbar verbunden werden kann, wobei das Ventilgehäuse und die Lufttrocknerpatrone durch achsparalleles Zusammenführen miteinander koppelbar sind, wobei das Ventilgehäuse und die Lufttrocknerpatrone Einrichtungen aufweisen, die eine dichte Verbindung zwischen dem Ventilgehäuse und der Lufttrocknerpatrone nicht in allen mit Bezug auf die Achse der Lufttrocknerpatrone definierten Winkelpositionen der Lufttrocknerpatrone gegenüber dem Ventilgehäuse zulassen, und wobei dass die Einrichtung des Ventilgehäuses einen exzentrischen Vorsprung umfasst.

13. Ventilgehäuse (12) nach Anspruch 12, **dadurch gekennzeichnet, dass** die Einrichtung des Ventilgehäuses einen gezahnten Bereich aufweist.

14. Lufttrocknerpatrone für eine Druckluftversorgungseinrichtung (10), insbesondere nach einem der vorangehenden Ansprüche, wobei die im Wesentlichen axialsymmetrische Lufttrocknerpatrone mit eine Ventilgehäuse lösbar verbunden werden kann, wobei das Ventilgehäuse und die Lufttrocknerpatrone durch achsparalleles Zusammenführen miteinander koppelbar sind, wobei das Ventilgehäuse und die Lufttrocknerpatrone Einrichtungen aufweisen, die eine dichte Verbindung zwischen dem Ventilgehäuse und der Lufttrocknerpatrone nicht in allen mit Bezug auf die Achse der Lufttrocknerpatrone definierten Winkelpositionen der Lufttrocknerpatrone gegenüber dem Ventilgehäuse zulassen, und wobei die Einrichtung der Lufttrocknerpatrone eine exzentrische Ausnehmung umfasst.

15. Lufttrocknerpatrone nach Anspruch 14, **dadurch gekennzeichnet, dass** die Einrichtung der Lufttrocknerpatrone einen gezahnten Bereich aufweist.

## Claims

1. A compressed air supply device (10) for a utility vehicle, having a valve housing (12) and having a substantially axially symmetrical, exchangeable air dryer cartridge (14) which is connected to the valve housing, with the valve housing and the air dryer cartridge being connected to one another by means of a substantially circular seal (30) which lies in a plane perpendicular to the axis of the air dryer cartridge, with it being possible for the valve housing (12) and the air dryer cartridge (14) to be coupled to one another by being joined together in an axially parallel fashion, with the valve housing and the air dryer cartridge having devices (104, 148) which permit a sealed connection between the valve housing and the air dryer cartridge in not all angular positions, defined in relation to the axis of the air dryer cartridge, of the air dryer cartridge with respect to the valve housing, and with the devices comprising an eccentric projection (148), which is arranged on the valve housing at a distance from the axis, and a recess (140) on the air dryer cartridge, into which recess (140) the projection protrudes in the connected state.

2. The compressed air supply device (10) as claimed in claim 1, **characterized in that** the projection (148) protrudes into the recess (140) in an at least partially form-fitting manner.

3. The compressed air supply device (10) as claimed in claim 1 or 2, **characterized in that** the devices comprise toothed regions on the valve housing and on the air dryer cartridge, which toothed regions permit sealed joining-together of the valve housing and filter cartridge only in predefined angular positions.

4. The compressed air supply device (10) as claimed in one of the preceding claims, **characterized in that** the valve housing (12) and the air dryer cartridge (14) are connected to one another by means of a bayonet connection (16).

5. The compressed air supply device as claimed in claim 4, **characterized in that** the air dryer cartridge (14) and the valve housing (12) have, at least in sections, in each case one substantially radially outwardly extending collar (18, 20), with sections (20) being formed by at least one of said collars, which sections (20) have an axial collar thickness which increases in the closing direction of the bayonet connection, and **in that** an outer bayonet ring (24) which is guided by means of the collars and which can be released from the air dryer cartridge and the valve housing is provided, which outer bayonet ring (24) has a radially inwardly extending collar (78) and, offset in the axial direction with respect thereto, inwardly directed projections (80), with the axial width of the projections (80) being matched to the variable axial collar thickness in such a way that the bayonet connection (16) can be closed or released by means of a relative rotation of the outer bayonet ring and the valve housing or air dryer cartridge respectively.

6. The compressed air supply device as claimed in claim 5, **characterized in that** the collar (20) of the valve housing (12) has a plurality of collar sections (20) which extend in the tangential direction and which have an axial collar thickness which increases in the closing direction of the bayonet connection (16) and recesses (28) which are provided between said collar sections (20), and **in that** the collar (18) of the air dryer cartridge (14) extends substantially uniformly over the entire periphery and, when the bayonet connection is closed, interacts by means of a seal (30) with the valve housing.

7. The compressed air supply device as claimed in claim 6, **characterized in that** the collar sections (20) at least partially have a stop for limiting the closing rotation of the bayonet connection.

8. The compressed air supply device as claimed in one of claims 4 to 7, **characterized in that** the air dryer cartridge (14) has a substantially radially outwardly extending collar (18) which, in the closed state of the bayonet connection (16), can be acted on with a force in the axial direction by means of an inner bayonet ring (32) which surrounds the air dryer cartridge, **in that** the inner bayonet ring has a radially outwardly extending collar (34) and, offset in the axial direction with respect thereto, outwardly directed projections (36) which have an axial projection thickness which increases in the closing direction of the bayonet connection, and **in that** a part, which is situated at least partially radially outside the inner bayonet ring, of the valve housing has radially outwardly extending recesses (38) whose axial thicknesses are adapted to the projections of the valve housing in such a way that the bayonet connection can be closed or released by means of a relative rotation of the inner bayonet ring and the valve housing (12).

9. The compressed air supply device as claimed in claim 8, **characterized in that** the projections (36) of the inner bayonet ring at least partially have a stop for limiting the closing rotation of the bayonet connection (16).

10. The compressed air supply device as claimed in one of the preceding claims, **characterized in that** the bayonet connection (16) has a bayonet ring (24, 32) which has an opening (44) which holds a securing element (42), with the securing element latching, in the closed state of the bayonet connection, into an opening (46) of the valve housing (12), via which opening (46) the compressed air supply device (10) can be ventilated by means of an actuation of the securing element.

11. The compressed air supply device as claimed in claim 10, **characterized in that** the securing element (42) has a lug (48) which is pressed by the force of a spring (50) into the opening (46) of the valve housing (12), with the lug being movable counter to the spring force in order to ventilate the compressed air supply device (10) and in order to enable the opening movement of the bayonet connection (16).

12. A valve housing (12) for a compressed air supply device (10), in particular as claimed in one of the preceding claims, with it being possible for the valve housing to be releasably connected to a substantially axially symmetrical air dryer cartridge (14), with it being possible for the valve housing and the air dryer cartridge to be coupled to one another by being joined together in an axially parallel fashion, with the valve housing and the air dryer cartridge having devices which permit a sealed connection between the valve housing and the air dryer cartridge in not all angular positions, defined in relation to the axis of the air dryer cartridge, of the air dryer cartridge with respect to the valve housing, and with the device of the valve housing comprising an eccentric projection.

13. The valve housing (12) as claimed in claim 12, **characterized in that** the device of the valve housing has a toothed region.

14. An air dryer cartridge for a compressed air supply device (10), in particular as claimed in one of the preceding claims, with it being possible for the substantially axially symmetrical air dryer cartridge to be releasably connected to a valve housing, with it being possible for the valve housing and the air dryer cartridge to be coupled to one another by being joined together in an axially parallel fashion, with the valve housing and the air dryer cartridge having devices which permit a sealed connection between the valve housing and the air dryer cartridge in not all angular positions, defined in relation to the axis of the air dryer cartridge, of the air dryer cartridge with respect to the valve housing, and with the device of the air dryer cartridge comprising an eccentric recess.

15. The air dryer cartridge as claimed in claim 14, **characterized in that** the device of the air dryer cartridge has a toothed region.

## Revendications

1. Dispositif (10) d'alimentation en air comprimé pour un véhicule utilitaire, comprenant un corps (12) de vanne et une cartouche (14) de sécheur d'air remplaçable, reliée au corps de vanne et sensiblement de symétrie axiale, le corps de vanne et la cartouche de sécheur d'air étant reliés entre eux par une étanchéité (30) sensiblement circulaire, qui se trouve dans un plan perpendiculaire à l'axe de la cartouche de sécheur d'air, le corps (12) de vanne et la cartouche (14) de sécheur d'air pouvant être accouplés entre eux en les guidant parallèlement à l'axe, le corps de vanne et la cartouche de sécheur d'air ayant des dispositifs (104, 108), qui n'autorisent pas une liaison étanche entre le corps de vanne et la cartouche de sécheur d'air dans toutes les positions angulaires de la cartouche de sécheur d'air par rapport au corps de vanne définies par rapport à l'axe de la cartouche de sécheur d'air, et dans lequel les dispositifs comprennent une saillie (148) excentrée disposée sur le corps de vanne à distance de l'axe et un évidement (140), qui est disposé sur la cartouche de sécheur d'air et dans lequel la saillie pénètre à l'état relié.

2. Dispositif (10) d'alimentation en air comprimé suivant la revendication 1, **caractérisé en ce que** la saillie (148) pénètre, au moins en partie par complémentarité de forme, dans l'évidement (140).

3. Dispositif (10) d'alimentation en air comprimé suivant la revendication 1 ou 2, **caractérisé en ce que** les dispositifs comprennent des zones dentées sur le corps de vanne et sur la cartouche de sécheur d'air, qui n'autorisent une jonction étanche du corps de vanne et de la cartouche de filtre que dans des positions angulaires prescrites.

4. Dispositif (10) d'alimentation en air comprimé suivant l'une des revendications précédentes, **caractérisé en ce que** le corps (12) de vanne et la cartouche (14) de sécheur d'air sont reliés entre eux par une fermeture (16) à baïonnette.

5. Dispositif d'alimentation en air comprimé suivant la revendication 4, **caractérisé en ce que** la cartouche (14) de sécheur d'air et le corps (12) de vanne ont au moins par endroit respectivement un collet (18, 20) s'étendant sensiblement radialement vers l'extérieur, dans lequel il est formé par au moins l'un de ces collets des segments (20), qui ont une épaisseur axiale croissante dans la direction de fermeture de la fermeture à baïonnette, et **en ce qu'**il est prévu un anneau (24) de baïonnette extérieur, guidé par les collets, pouvant se détacher de la cartouche de sécheur d'air et du corps de vanne et ayant un collet (78) s'étendant vers l'intérieur dans la direction radiale et des saillies (80) dirigées vers l'intérieur et qui en sont décalées dans la direction axiale, la largeur axiale des saillies (80) de l'épaisseur axiale variable du collet étant adaptée, de manière à ce que la fermeture (16) à baïonnette puisse être fermée ou détachée par une rotation relative de l'anneau de baïonnette extérieur et du corps de vanne ou de la cartouche de sécheur d'air.

6. Dispositif d'alimentation en air comprimé suivant la revendication 5, **caractérisé en ce que** le collet (20) du corps (12) de vanne a plusieurs segments (20) de collet, qui s'étendent dans la direction périphérique, qui ont des épaisseurs axiales croissantes dans la direction de fermeture de la fermeture (16) à baïonnette et des évidements (28) prévus entre eux, et **en ce que** le collet (18) de la cartouche (14) de sécheur d'air s'étend sensiblement uniformément sur tout le pourtour et, lorsque la fermeture à baïonnette est fermée, coopère avec le corps de vanne par une étanchéité (30).

7. Dispositif d'alimentation en air comprimé suivant la revendication 6, **caractérisé en ce que** les segments (20) de collet ont au moins en partie une butée de limitation de la rotation en fermeture de la fermeture à baïonnette.

8. Dispositif d'alimentation en air comprimé suivant l'une des revendications 4 à 7, **caractérisé en ce que** la cartouche (14) de sécheur d'air a un collet (18), qui s'étend sensiblement radialement vers l'extérieur et qui, par un anneau (32) de baïonnette intérieur entourant la cartouche de sécheur d'air, peut être, lorsque la fermeture (16) à baïonnette est à l'état fermé, soumise à une force dans la direction axiale, **en ce que** l'anneau de baïonnette intérieur a un collet (34) s'étendant vers l'extérieur dans la direction radiale et, décalées par rapport à cela dans la direction axiale, des saillies (36) qui sont dirigées vers l'extérieur et qui ont des épaisseurs de saillie axiale croissantes dans la direction de fermeture de la fermeture à baïonnette, et **en ce qu'**une partie du corps de vanne, se trouvant en moins en partie radialement à l'extérieur de l'anneau de baïonnette intérieur, a des évidements (38) qui s'étendent radialement vers l'extérieur et dont les épaisseurs axiales sont adaptées aux saillies du corps de vanne, de manière à ce que la fermeture à baïonnette puisse être fermée ou détachée par une rotation relative de l'anneau de baïonnette intérieur et du corps (12) de vanne.

9. Dispositif d'alimentation en air comprimé suivant la revendication 8, **caractérisé en ce que** les saillies (36) de l'anneau de baïonnette intérieur ont au moins en partie une butée de limitation de la rotation de fermeture de la fermeture (16) de baïonnette.

10. Dispositif d'alimentation en air comprimé suivant l'une des revendications précédentes, **caractérisé en ce que** la fermeture (16) de baïonnette a un anneau (24, 32) de baïonnette, qui a une ouverture recevant un élément (42) de sécurité, l'élément de sécurité s'encliquetant, lorsque la fermeture de baïonnette est à l'état fermé, dans une ouverture (46) du boîtier (12) de vanne, ouverture par laquelle le dispositif (10) d'alimentation en air comprimé peut être purgé en actionnant l'élément de sécurité.

11. Dispositif d'alimentation en air comprimé suivant la revendication 10, **caractérisé en ce que** l'élément (42) de sécurité a un bec (48), qui est repoussé par la force d'un ressort (50) dans l'ouverture (46) du corps (12) de vanne, le bec pouvant être déplacé à l'encontre de la force du ressort pour purger le dispositif (10) d'alimentation en air comprimé et pour libérer le mouvement d'ouverture de la fermeture (16) à baïonnette.

12. Corps (12) de vanne pour un dispositif (10) d'alimentation en air comprimé, notamment suivant l'une des revendications précédentes, dans lequel le corps de vanne peut être relié d'une manière amovible à une cartouche (14) de sécheur d'air sensiblement de symétrie axiale, dans lequel le corps de vanne et la cartouche de sécheur d'air peuvent être accouplés l'un à l'autre par guidage parallèlement à l'axe, le corps de vanne et la cartouche de sécheur d'air ayant des dispositifs, qui n'autorisent pas une liaison étanche entre le corps de vanne et la cartouche de sécheur d'air dans toutes les positions angulaires de la cartouche de sécheur d'air par rapport au corps de vanne définies par rapport à l'axe de la cartouche de sécheur d'air, et dans lequel le dispositif du corps de vanne comprend une saillie excentrée.

13. Corps (12) de vanne suivant la revendication 12, **caractérisé en ce que** le dispositif du corps de vanne comporte une zone dentée.

14. Cartouche de sécheur d'air pour un dispositif (10) d'alimentation en air comprimé, notamment suivant l'une des revendications précédentes, dans laquelle la cartouche de sécheur d'air sensiblement à symétrie axiale peut être reliée de manière amovible à un corps de vanne, le corps de vanne et la cartouche de sécheur d'air pouvant être accouplés l'un à l'autre par guidage parallèlement à l'axe, le corps de vanne et la cartouche de sécheur d'air ayant des dispositifs qui n'autorisent pas une liaison étanche entre le corps de vanne et la cartouche de sécheur d'air dans toutes les positions angulaires de la cartouche de sécheur d'air par rapport au corps de vanne définies par rapport à l'axe de la cartouche de sécheur d'air, et dans lequel le dispositif de la cartouche de sécheur d'air comprend un évidement excentré.

15. Corps de vanne suivant la revendication (14), **caractérisé en ce que** le dispositif de la cartouche de sécheur d'air a une zone dentée.
